(19) Europäisches Patentamt
European Patent Office
Office européen des brevets

(11) **EP 3 609 283 A2**

(12) **EUROPEAN PATENT APPLICATION**

(43) Date of publication:
**12.02.2020 Bulletin 2020/07**

(51) Int Cl.:
**H04W 74/08** (2009.01)          **H04L 5/00** (2006.01)
**H04W 72/04** (2009.01)

(21) Application number: **19190954.8**

(22) Date of filing: **09.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2018   US 201862717445 P**

(71) Applicant: **ASUSTek Computer Inc.**
**Peitou, Taipei-City 112 (TW)**

(72) Inventors:
• LIOU, Jia-Hong
  **Taipei City 112 (TW)**
• LI, Ming-Che
  **Taipei City 112 (TW)**

(74) Representative: **Hoefer & Partner Patentanwälte mbB**
**Pilgersheimer Straße 20**
**81543 München (DE)**

(54) **METHOD AND APPARATUS FOR SLOT FORMAT INDICATION FOR AN ENDING SLOT IN UNLICENSED SPECTRUM IN A WIRELESS COMMUNICATION SYSTEM**

(57)      Methods and apparatuses are disclosed from the perspective of a User Equipment (UE). In one method, the method includes the UE is configured by a network node to receive and/or monitor a signal within a channel occupancy time, wherein the signal indicates information of one or multiple TTIs (Transmission Time Interval) of a serving cell (1105). The method further includes the UE derives state or functionality of one or more symbol(s) in the one or multiple TTIs based on the information, wherein the information indicates a symbol in the one or multiple TTIs to be any of "downlink", "uplink", "flexible", or "blank" (1110). The method also includes the UE derives or is indicated that at least one set of consecutive symbol(s) are indicated as "blank" (1115). Furthermore, the method includes the UE prevents from or is not required to perform reception for (dynamically) indicated or configured physical DL (Downlink) channel or RS (Reference Signal) within the set of consecutive symbols indicated as "blank" (1120). In addition, the method includes the UE prevents from or is not required to perform transmission for (dynamically) indicated or configured physical UL (Uplink) channel or RS within the set of consecutive symbols indicated as "blank" (1125). Also, the method includes the UE being allowed to perform a channel access procedure or LBT (Listen Before Talk) scheme within the set of consecutive symbols indicated as "blank" (1130)

FIG. 11

## Description

This disclosure generally relates to wireless communication networks, and more particularly, to a method and apparatus for indicating slot format indication for an ending slot in unlicensed spectrum in a wireless communication system.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

## SUMMARY

Methods and apparatuses are disclosed from the perspective of a User Equipment (UE) and defined in the independent claims. The dependent claims define preferred embodiments thereof. In one method, the method includes the UE is configured by a network node to receive and/or monitor a signal within a channel occupancy time, wherein the signal indicates information of one or multiple TTIs (Transmission Time Interval) of a serving cell. The method further includes the UE derives state or functionality of one or more symbol(s) in the one or multiple TTIs based on the information, wherein the information indicates a symbol in the one or multiple TTIs to be any of "downlink", "uplink", "flexible", or "blank". The method also includes the UE derives or is indicated that at least one set of consecutive symbol(s) are indicated as "blank". Furthermore, the method includes the UE prevents from or is not required to perform reception for (dynamically) indicated or configured physical DL (Downlink) channel or RS (Reference Signal) within the set of consecutive symbols indicated as "blank". In addition, the method includes the UE prevents from or is not required to perform transmission for (dynamically) indicated or configured physical UL (Uplink) channel or RS within the set of consecutive symbols indicated as "blank". Also, the method includes the UE being allowed to perform a channel access procedure or LBT (Listen Before Talk) scheme within the set of consecutive symbols indicated as "blank".

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a reproduction of Table 4.1.1-1 of 3GPP TS 37.213 v15.0.0.

FIG. 6 is a reproduction of Table 4.2.1-1 of 3GPP TS 37.213 v15.0.0.

FIG. 7 is a reproduction of Table 4.2-1 of 3GPP TS 38.211 v15.2.0.

FIG. 8 is a reproduction of Table 4.3.2-1 of 3GPP TS 38.211 v15.2.0.

FIG. 9 is a reproduction of Table 4.3.2-2 of 3GPP TS 38.211 v15.2.0.

FIGS. 10A and 10B are a reproduction of Table 11.1.1-1 of 3GPP TS 38.213 v15.2.0.

FIG. 11 is a flow chart according to one exemplary embodiment.

FIG. 12 is a flow chart according to one exemplary embodiment.

FIG. 13 is a flow chart according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, 3GPP NR (New Radio), or some other modulation techniques.

In particular, the exemplary wireless communication systems devices described below may be designed to support one or more standards such as the standard offered by a consortium named "3rd Generation Partnership Project" referred to herein as 3GPP, including: Final Report of 3GPP TSG RAN WG1 #92bis v1.0.0 (Sanya, China, 16th - 20th April 2018); Draft Report of 3GPP TSG RAN WG1 #93 v0.2.0 (Busan, South Korea, 21st - 25th May 2018); TS 37.213 v15.0.0, "Physical layer procedures for shared spectrum channel access"; TS 38.211 V15.2.0, "Physical channels and modulation"; TS 38.212 V15.2.0, "Multiplexing and channel coding"; TS 38.213 V15.2.0, "Physical layer procedures for control"; and TS 38.331 V15.2.1, " Radio Resource Control (RRC) protocol specification". The standards and documents listed above are hereby expressly incorporated by reference in their entirety.

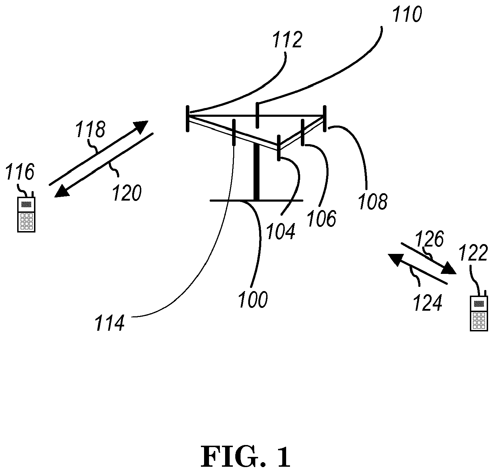

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), a network node, a network, or some other terminology. An access terminal (AT) may also be called user equipment (UE), a wireless communication device, terminal, access terminal or some other terminology.

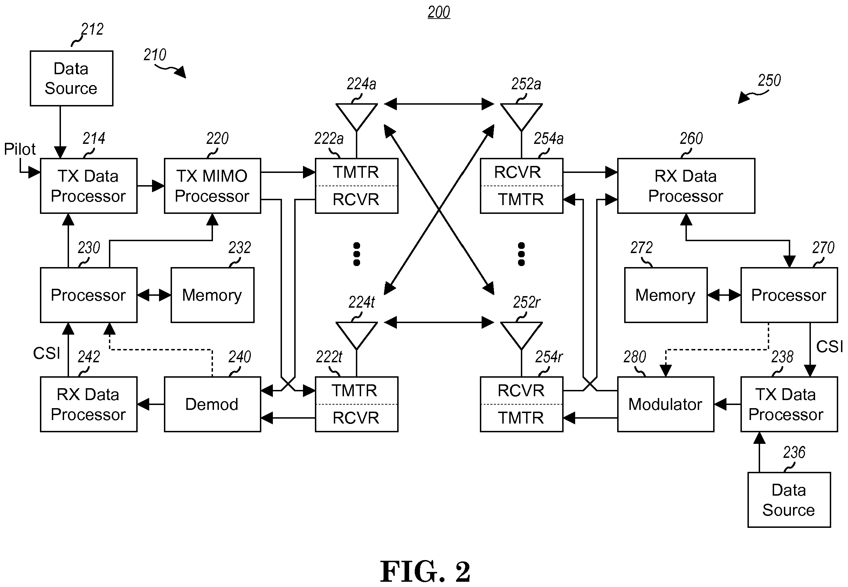

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

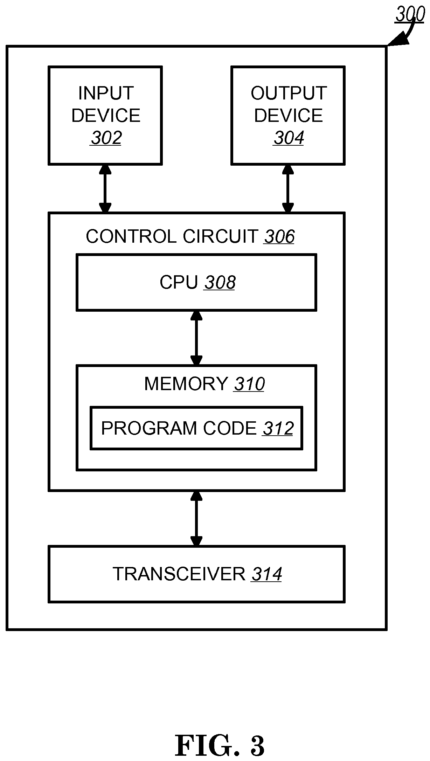

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

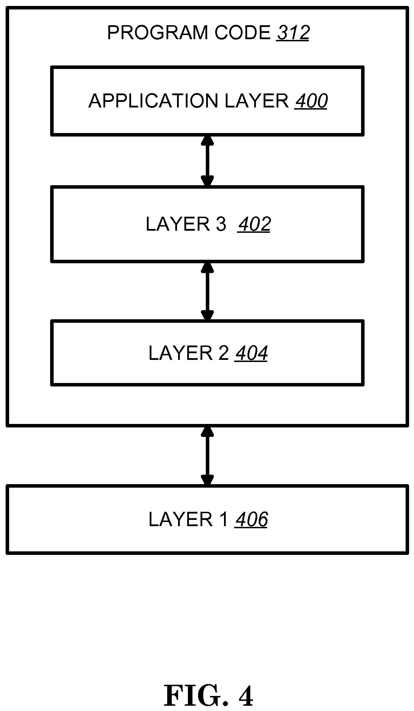

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

The Final Report of 3GPP TSG RAN WG1 #92bis v1.0.0 includes the following agreements:

Agreement:

• NR-U supports both Type-A and Type-B mapping already supported in NR

  • Additional starting positions and durations are not precluded

• [...]

The Draft Report of 3GPP TSG RAN WG1 #93 v0.2.0 includes the following agreements:

Agreement:

- Single and multiple DL to UL and UL to DL switching within a shared gNB COT is identified to be beneficial and can be supported
  ∘ LBT requirements to support single or multiple switching points, include

    ■ For gap of less than 16us: no-LBT can be used

    - Restrictions/conditions on when no-LBT option can be used will be further identified, in consideration of fair coexistence.

    ■ For gap of above 16us but does not exceed 25us: one-shot LBT can be used

    - Restrictions/conditions on when one-shot LBT option can be used will be further identified, in consideration of fair coexistence.

    ■ For single switching point, for the gap from DL transmission to UL transmission exceeds 25us: one-shot LBT is used

    - [...]

  ■ [...]

Agreement:

- Benefits of using a signal that facilitates its detection with low complexity can be investigated including all/part of the following scenarios/use cases:

    ∘ UE power saving
    ∘ Improved coexistence
    ∘ Spatial reuse at least within the same operator network
    ∘ Serving cell transmission burst acquisition
    ∘ [...]

Agreement:

- LTE-LAA channel access mechanism is adopted as baseline for 5GHz
  ∘ Further enhancements not precluded
- LTE-LAA channel access mechanism is adopted as starting point of the design for 6GHz
  ∘ Further enhancements not precluded
- For 5GHz band, a no-LBT option is beneficial for NR-U, such as for supporting fast A/N feedback, and is permitted per regulation.
  ∘ Restrictions/conditions on when no-LBT option can be used will be further identified, e.g., in consideration of fair coexistence.
- No-LBT option can be applied to 6GHz band if allowed by regulation
  ∘ Restrictions/conditions on when no-LBT option can be used will be further identified, if fair coexistence criterion is defined for 6GHz band

Note: Channel access mechanisms need to comply with regulations and may therefore need to be adapted for particular frequency ranges.

3GPP TS 37.213 includes the following description related to channel access procedure:

**4 Channel access procedure**

**4.1 Downlink channel access procedures**

An eNB operating LAA Scell(s) shall perform the channel access procedures described in this sub clause for accessing the channel(s) on which the LAA Scell(s) transmission(s) are performed.

**4.1.1 Channel access procedure for transmission(s) including PDSCH/PDCCH/EPDCCH**

The eNB may transmit a transmission including PDSCH/PDCCH/EPDCCH on a carrier on which LAA Scell(s) transmission(s) are performed , after first sensing the channel to be idle during the slot durations of a defer duration $T_d$ ; and after the counter $N$ is zero in step 4. The counter $N$ is adjusted by sensing the channel for additional slot duration(s) according to the steps below:

1) set $N = N_{init}$, where $N_{init}$ is a random number uniformly distributed between 0 and $CW_p$, and go to step 4;

2) if $N > 0$ and the eNB chooses to decrement the counter, set $N = N - 1$ ;

3) sense the channel for an additional slot duration, and if the additional slot duration is idle, go to step 4; else, go to step 5;

4) if $N = 0$, stop; else, go to step 2.

5) sense the channel until either a busy slot is detected within an additional defer duration $T_d$ or all the slots of the additional defer duration $T_d$ are detected to be idle;

6) if the channel is sensed to be idle during all the slot durations of the additional defer duration $T_d$, go to step 4; else, go to step 5;

If an eNB has not transmitted a transmission including PDSCH/PDCCH/EPDCCH on a carrier on which LAA Scell(s) transmission(s) are performed after step 4 in the procedure above, the eNB may transmit a transmission including PDSCH/PDCCH/EPDCCH on the carrier, if the channel is sensed to be idle at least in a slot duration $T_{sl}$ when the eNB is ready to transmit PDSCH/PDCCH/EPDCCH and if the channel has been sensed to be idle during all the slot durations of a defer duration $T_d$ immediately before this transmission. If the channel has not been sensed to be idle in a slot duration $T_{sl}$ when the eNB first senses the channel after it is ready to transmit or if the channel has been sensed to be not idle during any of the slot durations of a defer duration $T_d$ immediately before this intended transmission, the eNB proceeds to step 1 after sensing the channel to be idle during the slot durations of a defer duration $T_d$.

The defer duration $T_d$ consists of duration $T_f = 16us$ immediately followed by $m_p$ consecutive slot durations where each slot duration is $T_{sl} = 9us$, and $T_f$ includes an idle slot duration $T_{sl}$ at start of $T_f$ ;

A slot duration $T_{sl}$ is considered to be idle if the eNB senses the channel during the slot duration, and the power detected by the eNB for at least $4us$ within the slot duration is less than energy detection threshold $X_{Thresh}$. Otherwise, the slot duration $T_{sl}$ is considered to be busy.

$CW_{min,p} \leq CW_p \leq CW_{max,p}$ is the contention window. $CW_p$ adjustment is described in sub clause 4.1.4.

$CW_{min,p}$ and $CW_{max,p}$ are chosen before step 1 of the procedure above.

$m_p$, $CW_{min,p}$, and $CW_{max,p}$ are based on channel access priority class associated with the eNB transmission, as shown in Table 4.1.1-1.

$X_{Thresh}$ adjustment is described in sub clause 4.1.4

If the eNB transmits discovery signal transmission(s) not including PDSCH/PDCCH/EPDCCH when $N > 0$ in the procedure above, the eNB shall not decrement N during the slot duration(s) overlapping with discovery signal transmission.

The eNB shall not continuously transmit on a carrier on which the LAA Scell(s) transmission(s) are performed, for a period exceeding $T_{mcot,p}$ as given in Table 4.1.1-1.

For $p = 3$ and $p = 4$ , if the absence of any other technology sharing the carrier can be guaranteed on a long term basis (e.g. by level of regulation), $T_{mcot,p} = 10ms$, otherwise, $T_{mcot,p} = 8ms$.

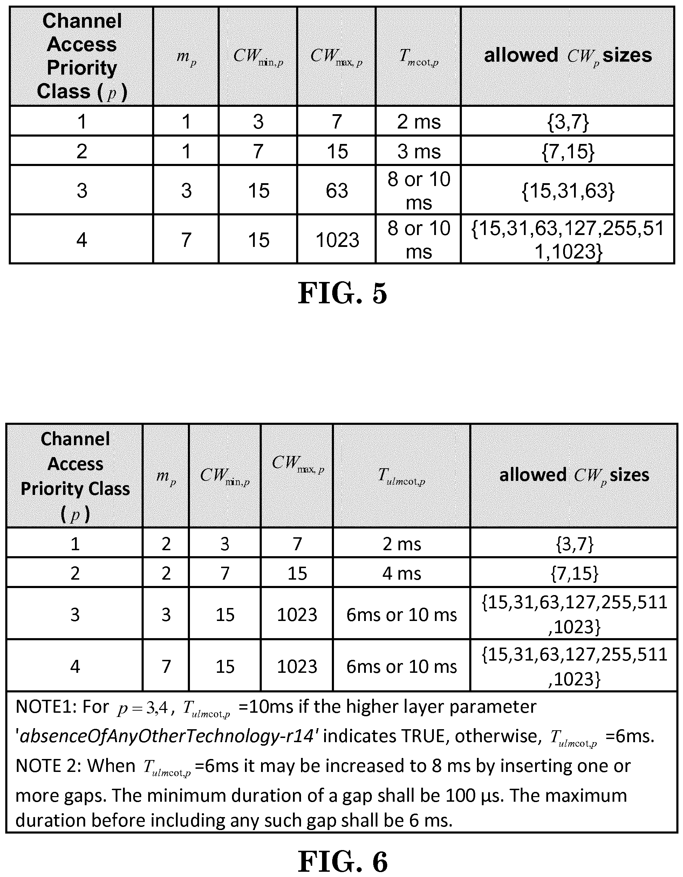

**[Table 4.1.1-1 of 3GPP TS 37.213 v15.0.0, entitled "Channel Access Priority Class", is reproduced as FIG. 5]**

For LAA operation in Japan, if the eNB has transmitted a transmission after $N = 0$ in step 4 of the procedure above, the eNB may transmit the next continuous transmission, for duration of maximum $T_j$ =4 ms, immediately after sensing the channel to be idle for at least a sensing interval of $T_{js}$ =34us and if the total sensing and transmission time is not more than $1000 \cdot T_{mcot} + \lceil T_{mcot} / T_j - 1 \rceil \cdot T_{js}$ µsec. $T_{js}$ consists of duration $T_f$ = 16$us$ immediately followed by two slot durations $T_{sl}$ = 9$us$ each and $T_f$ includes an idle slot duration $T_{sl}$ at start of $T_f$. The channel is considered to be idle for $T_{js}$ if it is sensed to be idle during the during the slot durations of $T_{js}$.

### 4.1.2 Channel access procedure for transmissions including discovery signal transmission(s) and not including PDSCH

An eNB may transmit a transmission including discovery signal but not including PDSCH on a carrier on which LAA Scell(s) transmission(s) are performed immediately after sensing the channel to be idle for at least a sensing interval $T_{drs}$ = 25$us$ and if the duration of the transmission is less than 1 ms. $T_{drs}$ consists of a duration $T_f$ =16$us$ immediately followed by one slot duration $T_{sl}$ = 9$us$ and $T_f$ includes an idle slot duration $T_{sl}$ at start of $T_f$. The channel is considered to be idle for $T_{drs}$ if it is sensed to be idle during the slot durations of $T_{drs}$.

### 4.1.3 Channel access procedure for transmissions including PDCCH and not including PDSCH

If a PUSCH transmission indicates COT sharing, an eNB may transmit a transmission including PDCCH but not including PDSCH on the same carrier immediately after sensing the channel to be idle for at least a sensing interval $T_{pdcch}$ = 25$_{us}$, if the duration of the PDCCH is less than or equal to two OFDM symbols length and it shall contain at least AUL-DFI or UL grant to the UE from which the PUSCH transmission indicating COT sharing was received. $T_{pdcch}$ consists of a duration $T_f$ = 16$us$ immediately followed by one slot duration $T_{sl}$ = 9$us$ and $T_f$ includes an idle slot duration $T_{sl}$ at start of $T_f$. The channel is considered to be idle for $T_{pdcch}$ if it is sensed to be idle during the slot durations of $T_{pdcch}$. [...]

### 4.1.6 Channel access procedure for transmission(s) on multiple carriers

An eNB can access multiple carriers on which LAA Scell(s) transmission(s) are performed, according to one of the Type A or Type B procedures described in this Subclause.

### 4.1.6.1 Type A multi-carrier access procedures

The eNB shall perform channel access on each carrier $c_i \in C$, according to the procedures described in Subclause 4.1.1, where $C$ is a set of carriers on which the eNB intends to transmit, and $i$ = 0,1,...$q$ - 1, and $q$ is the number of carriers on which the eNB intends to transmit.
The counter $N$ described in Subclause 4.1.1 is determined for each carrier $c_i$ and is denoted as $N_{c_i}$. $N_{c_i}$ is maintained according to Subclause 4.1.5.1.1 or 4.1.5.1.2.

### 4.1.6.1.1 Type A1

Counter $N$ as described in Subclause 4.1.1 is independently determined for each carrier $c_i$ and is denoted as $N_{c_i}$.
If the absence of any other technology sharing the carrier cannot be guaranteed on a long term basis (e.g. by level of regulation), when the eNB ceases transmission on any one carrier $c_j \in C$, for each carrier $c_i \neq c_j$, the eNB can resume decrementing $N_{c_i}$ when idle slots are detected either after waiting for a duration of 4. $T_{sl}$, or after reinitialising $N_{c_i}$.

### 4.1.6.1.2 Type A2

Counter $N$ is determined as described in Subclause 4.1.1 for carrier $c_j \in C$, and is denoted as $N_{c_j}$, where $c_j$ is the carrier that has the largest $CW_p$ value. For each carrier $c_i$, $N_{c_i} = N_{c_j}$. When the eNB ceases transmission on any one carrier for which $N_{c_i}$ is determined, the eNB shall reinitialise $N_{c_i}$ for all carriers.

### 4.1.6.2 Type B multi-carrier access procedure

A carrier $c_j \in C$ is selected by the eNB as follows

- the eNB selects $c_j$ by uniformly randomly choosing $c_j$ from $C$ before each transmission on multiple carriers $c_i \in C$, or
- the eNB selects $c_j$ no more frequently than once every 1 second,

where $C$ is a set of carriers on which the eNB intends to transmit, $i = 0,1,...q\text{-}1$, and $q$ is the number of carriers on which the eNB intends to transmit.

To transmit on carrier $c_j$

- the eNB shall perform channel access on carrier $c_j$ according to the procedures described in Subclause 4.1.1 with the modifications described in 4.1.5.2.1 or 4.1.5.2.2.

To transmit on carrier $c_i \neq c_j$, $c_i \in C$

- for each carrier $c_i$, the eNB shall sense the carrier $c_i$ for at least a sensing interval $T_{mc} = 25us$ immediately before the transmitting on carrier $c_j$, and the eNB may transmit on carrier $c_i$ immediately after sensing the carrier $c_i$ to be idle for at least the sensing interval $T_{mc}$. The carrier $c_i$ is considered to be idle for $T_{mc}$ if the channel is sensed to be idle during all the time durations in which such idle sensing is performed on the carrier $c_j$ in given interval $T_{mc}$.

The eNB shall not continuously transmit on a carrier $c_i \neq c_j$, $c_i \in C$, for a period exceeding $T_{mcot,p}$ as given in Table 4.1.1-1, where the value of $T_{mcot,p}$ is determined using the channel access parameters used for carrier $c_j$.

### 4.1.6.2.1 Type B1

A single $CW_p$ value is maintained for the set of carriers $C$.

For determining $CW_p$ for channel access on carrier $c_j$, step 2 of the procedure described in sub clause 4.1.3 is modified as follows

- if at least $Z = 80\%$ of HARQ-ACK values corresponding to PDSCH transmission(s) in reference subframe $k$ of all carriers $c_i \in C$ are determined as NACK, increase $CW_p$ for each priority class $p \in \{1,2,3,4\}$ to the next higher allowed value; otherwise, go to step 1.

### 4.1.6.2.2 Type B2

A $CW_p$ value is maintained independently for each carrier $c_i \in C$ using the procedure described in Subclause 4.1.3.

For determining $N_{init}$ for carrier $c_j$, $CW_p$ value of carrier $c_{j1} \in C$ is used, where $c_{j1}$ is the carrier with largest $CW_p$ among all carriers in set $C$.

### 4.2 Uplink channel access procedures

A UE and a eNB scheduling UL transmission(s) for the UE shall perform the procedures described in this sub clause for the UE to access the channel(s) on which the LAA Scell(s) transmission(s) are performed.

### 4.2.1 Channel access procedure for uplink transmission(s)

The UE can access a carrier on which LAA Scell(s) UL transmission(s) are performed according to one of Type 1 or Type 2 UL channel access procedures. Type 1 channel access procedure is described in sub clause 4.2.1.1. Type 2 channel access procedure is described in sub clause 4.2.1.2.

If an UL grant scheduling a PUSCH transmission indicates Type 1 channel access procedure, the UE shall use Type 1 channel access procedure for transmitting transmissions including the PUSCH transmission unless stated otherwise in this sub clause.

A UE shall use Type 1 channel access procedure for transmitting transmissions including the PUSCH transmission on autonomous UL resources unless stated otherwise in this sub clause.

If an UL grant scheduling a PUSCH transmission indicates Type 2 channel access procedure, the UE shall use Type 2 channel access procedure for transmitting transmissions including the PUSCH transmission unless stated otherwise in this sub clause.

The UE shall use Type 1 channel access procedure for transmitting SRS transmissions not including a PUSCH transmission. UL channel access priority class $p = 1$ is used for SRS transmissions not including a PUSCH.

If the UE is scheduled to transmit PUSCH and SRS in subframe $n$, and if the UE cannot access the channel for PUSCH transmission in subframe $n$, the UE shall attempt to make SRS transmission in subframe $n$ according to uplink channel access procedures specified for SRS transmission.

**[Table 4.2.1-1 of 3GPP TS 37.213 v15.0.0, entitled "Channel Access Priority Class for UL", is reproduced as FIG. 6]**

If the UL duration and offset' field configures an 'UL offset' $l$ and an 'UL duration' $d$ for subframe $n$, then the scheduled UE may use channel access Type 2 for transmissions in subframes $n + l + i$ where $i = 0,1,...d$ - 1, irrespective of the channel access Type signalled in the UL grant for those subframes, if the end of UE transmission occurs in or before subframe $n + l + d$ - 1.

If the 'UL duration and offset' field configures an 'UL offset' $l$ and an 'UL duration' $d$ for subframe $n$ and the 'COT sharing indication for AUL' field is set to true, then a UE configured with autonomous UL may use channel access Type 2 for autonomous UL transmissions corresponding to any priority class in subframes $n+l+i$ where $i=0,1,...d$-1, if the end of UE autonomous UL transmission occurs in or before subframe $n+l+d$-1 and the autonomous UL transmission between $n+l$ and $n+l+d$-1 shall be contiguous.

If the 'UL duration and offset' field configures an 'UL offset' $l$ and an 'UL duration' $d$ for subframe $n$ and the 'COT sharing indication for AUL' field is set to false, then a UE configured with autonomous UL shall not transmit autonomous UL in subframes $n + l + i$ where $i = 0,1,...d$-1.

If the UE scheduled to transmit transmissions including PUSCH in a set subframes $n_0,n_1,...,n_{w-1}$ using PDCCH DCI Format 0B/4B, and if the UE cannot access the channel for a transmission in subframe $n_k$, the UE shall attempt to make a transmission in subframe $n_{k+1}$ according to the channel access type indicated in the DCI, where $k \in \{0,1,...w-2\}$, and w is the number of scheduled subframes indicated in the DCI.

If the UE is scheduled to transmit transmissions without gaps including PUSCH in a set of subframes $n_0,n_1,\cdots,n_{w-1}$ using one or more PDCCH DCI Format 0A/0B/4A/4B and the UE performs a transmission in subframe $n_k$ after accessing the carrier according to one of Type 1 or Type 2 UL channel access procedures, the UE may continue transmission in subframes after $n_k$ where $k \in \{0,1,\cdots w-1\}$.

If the beginning of UE transmission in subframe $n+1$ immediately follows the end of UE transmission in subframe $n$, the UE is not expected to be indicated with different channel access types for the transmissions in those subframes.

If the UE is scheduled to transmit transmissions including PUSCH Mode 1 in a set subframes $n_0,n_1,\cdots,n_{w-1}$ using PDCCH DCI Format 0A/4A/0B/4B and Type 1 channel access procedure, and if the UE cannot access the channel for a transmission in subframe $n_k$ according to the PUSCH starting position indicated in the DCI, the UE shall attempt to make a transmission in subframe $n_k$ with an offset of $o_i$ OFDM symbol and according to the channel access type indicated in the DCI, where $k \in \{0,1,\cdots w-1\}$ and $i \in \{0,7\}$, for $i =0$ the attempt is made at the PUSCH starting position indicated in the DCI, and w is the number of scheduled subframes indicated in the DCI. There is no limit on the number of attempts the UE should make for the transmission.

If the UE is scheduled to transmit transmissions including PUSCH Mode 1 in a set subframes $n_0,n_1,\cdots,n_{w-1}$ using PDCCH DCI Format 0A/4A/0B/4B and Type 2 channel access procedure, and if the UE cannot access the channel for a transmission in subframe $n_k$ according to the PUSCH starting position indicated in the DCI, the UE may attempt to make a transmission in subframe $n_k$ with an offset of $o_i$ OFDM symbol and according to the channel access type indicated in the DCI, where $k \in \{0,1,\cdots w-1\}$ and $i \in \{0,7\}$, for $i =0$ the attempt is made at the PUSCH starting position indicated in the DCI, and w is the number of scheduled subframes indicated in the DCI . The number of attempts the UE should make for the transmission is limited to $w+1$, where w is the number of scheduled subframes indicated in the DCI.

If the UE is scheduled to transmit without gaps in subframes $n_0,n_1,\cdots,n_{w-1}$ using one or more PDCCH DCI Format 0A/0B/4A/4B, and if the UE has stopped transmitting during or before subframe $n_{k1}$, $k1 \in \{0,1,\cdots w-2\}$, and if the channel is sensed by the UE to be continuously idle after the UE has stopped transmitting, the UE may transmit in a later subframe $n_{k2}$, $k2 \in \{1,\cdots w-1\}$ using Type 2 channel access procedure. If the channel sensed by the UE is not continuously idle after the UE has stopped transmitting, the UE may transmit in a later subframe $n_{k2}$, $k2 \in \{1,\cdots w-1\}$ using Type 1 channel access procedure with the UL channel access priority class indicated in the DCI corresponding to subframe $n_{k2}$.

If the UE receives an UL grant and the DCI indicates a PUSCH transmission starting in subframe $n$ using Type 1 channel access procedure, and if the UE has an ongoing Type 1 channel access procedure before subframe $n$ .

- if the UL channel access priority class value $p_1$ used for the ongoing Type 1 channel access procedure is same or larger than the UL channel access priority class value $p_2$ indicated in the DCI, the UE may transmit the PUSCH transmission in response to the UL grant by accessing the carrier by using the ongoing Type 1 channel access procedure.

- if the UL channel access priority class value $p_1$ used for the ongoing Type 1 channel access procedure is smaller than the UL channel access priority class value $p_2$ indicated in the DCI, the UE shall terminate the ongoing channel access procedure.

If the UE

- is scheduled to transmit on a set of carriers $C$ in subframe $n$, and if the UL grants scheduling PUSCH transmissions on the set of carriers $C$ indicate Type 1 channel access procedure, and if the same '*PUSCH starting position*' is indicated for all carriers in the set of carriers $C$, or

- intends to perform an autonomous uplink transmission on the set of carriers $C$ in subframe $n$ with Type 1 channel access procedure, and if the same $N_{\text{Start}}^{\text{FS3}}$ is used for all carriers in the set of carriers $C$, and
if the carrier frequencies of set of carriers $C$ is a subset of one of the sets of carrier frequencies defined in Subclause 5.7.4 in [2]

- the UE may transmit on carrier $c_i \in C$ using Type 2 channel access procedure,

  - if Type 2 channel access procedure is performed on carrier $c_i$ immediately before the UE transmission on carrier $c_j \in C$, $i \neq j$, and

  - if the UE has accessed carrier $c_j$ using Type 1 channel access procedure,

    - where carrier $c_j$ is selected by the UE uniformly randomly from the set of carriers $C$ before performing Type 1 channel access procedure on any carrier in the set of carriers $C$.

If the UE is scheduled to transmit on carrier $c_i$ by a UL grant received on carrier $c_j$, $i \neq j$, and if the UE is transmitting using autonomous UL on carrier $c_i$, the UE shall terminate the ongoing PUSCH transmissions using the autonomous UL at least one subframe before the UL transmission according to the received UL grant.

If the UE is scheduled by a UL grant received on a carrier to transmit a PUSCH transmission(s) starting from subframe $n$ on the same carrier using Type 1 channel access procedure and if at least for the first scheduled subframe occupies $N_{\text{RB}}^{\text{UL}}$ resource blocks and the indicated 'PUSCH starting position is OFDM symbol zero, and if the UE starts autonomous UL transmissions before subframe $n$ using Type 1 channel access procedure on the same carrier, the UE may transmit UL transmission(s) according to the received UL grant from subframe $n$ without a gap, if the priority class value of the performed channel access procedure is larger than or equal to priority class value indicated in the UL grant, and the autonomous UL transmission in the subframe preceding subframe $n$ shall end at the last OFDM symbol of the subframe regardless of the higher layer parameter *AulEndingPosition.* The sum of the lengths of the autonomous UL transmission(s) and the scheduled UL transmission(s) shall not exceed the maximum channel occupancy time corresponding to the priority class value used to perform the autonomous uplink channel access procedure. Otherwise, the UE shall terminate the ongoing autonomous UL transmission at least one subframe before the start of the UL transmission according to the received UL grant on the same carrier.

A eNB may indicate Type 2 channel access procedure in the DCI of an UL grant scheduling transmission(s) including PUSCH on a carrier in subframe $n$ when

- the eNB has transmitted on the carrier according to the channel access procedure described in sub clause 4.1.1,

- or an eNB may indicate using the 'UL duration and offset' field that the UE may perform a Type 2 channel access procedure for transmissions(s) including PUSCH on a carrier in subframe $n$ when the eNB has transmitted on the carrier according to the channel access procedure described in sub clause 4.1.1,

- or an eNB may indicate using the 'UL duration and offset' field and 'COT sharing indication for AUL' field that a UE configured with autonomous UL may perform a Type 2 channel access procedure for autonomous UL transmissions(s) including PUSCH on a carrier in subframe $n$ when the eNB has transmitted on the carrier according to the channel access procedure described in sub clause 4.1.1 and acquired the channel using the largest priority class value and the eNB transmission includes PDSCH,

- or an eNB may schedule transmissions including PUSCH on a carrier in subframe $n$, that follows a transmission by the eNB on that carrier with a duration of $T_{\text{short\_ul}} = 25us$, if subframe $n$ occurs within the time interval starting at $t_0$ and ending at $t_0 + T_{co}$, where $T_{co} = T_{m\text{cot},p} + T_g$, where

- $t_0$ is the time instant when the eNB has started transmission,

- $T_{m\text{cot},p}$ value is determined by the eNB as described in sub clause 4.1,

10

- $Tg$ is the total duration of all gaps of duration greater than 25us that occur between the DL transmission of the eNB and UL transmissions scheduled by the eNB, and between any two UL transmissions scheduled by the eNB starting from $t_0$.

The eNB shall schedule UL transmissions between $t_0$ and $t_0 + T_{co}$ in contiguous subframes if they can be scheduled contiguously.

For an UL transmission on a carrier that follows a transmission by the eNB on that carrier within a duration of $T_{short\_ul}$ = 25$us$, the UE may use Type 2 channel access procedure for the UL transmission.

If the eNB indicates Type 2 channel access procedure for the UE in the DCI, the eNB indicates the channel access priority class used to obtain access to the channel in the DCI.

### 4.2.1.1 Type 1 UL channel access procedure

The UE may transmit the transmission using Type 1 channel access procedure after first sensing the channel to be idle during the slot durations of a defer duration $T_d$; and after the counter $N$ is zero in step 4. The counter $N$ is adjusted by sensing the channel for additional slot duration(s) according to the steps described below.

  1) set $N = N_{init}$, where $N_{init}$ is a random number uniformly distributed between 0 and $CW_p$, and go to step 4;

  2) if $N > 0$ and the UE chooses to decrement the counter, set $N = N - 1$;

  3) sense the channel for an additional slot duration, and if the additional slot duration is idle, go to step 4; else, go to step 5;

  4) if $N = 0$, stop; else, go to step 2.

  5) sense the channel until either a busy slot is detected within an additional defer duration $T_d$ or all the slots of the additional defer duration $T_d$ are detected to be idle;

  6) if the channel is sensed to be idle during all the slot durations of the additional defer duration $T_d$, go to step 4; else, go to step 5;

If the UE has not transmitted a transmission including PUSCH or SRS on a carrier on which LAA Scell(s) transmission(s) are performed after step 4 in the procedure above, the UE may transmit a transmission including PUSCH or SRS on the carrier, if the channel is sensed to be idle at least in a slot duration $T_{sl}$ when the UE is ready to transmit the transmission including PUSCH or SRS, and if the channel has been sensed to be idle during all the slot durations of a defer duration $T_d$ immediately before the transmission including PUSCH or SRS. If the channel has not been sensed to be idle in a slot duration $T_{sl}$ when the UE first senses the channel after it is ready to transmit, or if the channel has not been sensed to be idle during any of the slot durations of a defer duration $T_d$ immediately before the intended transmission including PUSCH or SRS, the UE proceeds to step 1 after sensing the channel to be idle during the slot durations of a defer duration $T_d$.

The defer duration $T_d$ consists of duration $T_f$ = 16$us$ immediately followed by $m_p$ consecutive slot durations where each slot duration is $T_{sl}$ = 9$us$, and $T_f$ includes an idle slot duration $T_{sl}$ at start of $T_f$;

A slot duration $T_{sl}$ is considered to be idle if the UE senses the channel during the slot duration, and the power detected by the UE for at least 4$us$ within the slot duration is less than energy detection threshold $X_{Thresh}$. Otherwise, the slot duration $T_{sl}$ is considered to be busy.

$CW_{min,p} \leq CW_p \leq CW_{max,p}$ is the contention window. $CW_p$ adjustment is described in sub clause 4.2.2.

$CW_{min,p}$ and $CW_{max,p}$ are chosen before step 1 of the procedure above.

$m_p$, $CW_{min,p}$, and $CW_{max,p}$ are based on channel access priority class signalled to the UE, as shown in Table 4.2.1-1.

$X_{Thresh}$ adjustment is described in sub clause 4.2.3.

### 4.2.1.2 Type 2 UL channel access procedure

If the UL UE uses Type 2 channel access procedure for a transmission including PUSCH, the UE may transmit the transmission including PUSCH immediately after sensing the channel to be idle for at least a sensing interval $T_{short\_ul}$ = 25$us$. $T_{short\_ul}$ consists of a duration $T_f$ = 16$us$ immediately followed by one slot duration $T_{sl}$ = 9$us$ and $T_f$ includes an idle slot duration $T_{sl}$ at start of $T_f$. The channel is considered to be idle for $T_{short\_ul}$ if it is sensed to be idle during the slot

durations of $T_{\text{short\_ul}}$.
[...]
3GPP TS 38.211 includes the following description:

**4 Frame structure and physical resources**

[...]

**4.2 Numerologies**

Multiple OFDM numerologies are supported as given by Table 4.2-1 where $\mu$ and the cyclic prefix for a bandwidth part are obtained from the higher-layer parameter *subcarrierSpacing* and *cyclicPrefix,* respectively.

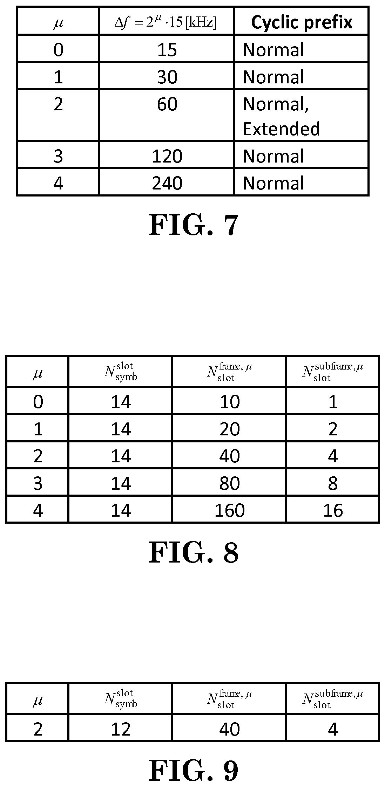

**[Table 4.2-1 of 3GPP TS 38.211 v15.2.0, entitled "Supported transmission numerologies" is reproduced as FIG. 7]**

**4.3 Frame structure**

[...]

**4.3.2 Slots**

For subcarrier spacing configuration $\mu$, slots are numbered $n_s^\mu \in \left\{0,..., N_{\text{slot}}^{\text{subframe},\mu} -1\right\}$ in increasing order within a subframe and $n_{s,f}^\mu \in \left\{0,..., N_{\text{slot}}^{\text{frame},\mu} -1\right\}$ in increasing order within a frame. There are $N_{\text{symb}}^{\text{slot}}$ consecutive OFDM symbols in a slot where $N_{\text{symb}}^{\text{slot}}$ depends on the cyclic prefix as given by Tables 4.3.2-1 and 4.3.2-2. The start of slot $n_s^\mu$ in a subframe is aligned in time with the start of OFDM symbol $n_s^\mu N_{\text{symb}}^{\text{slot}}$ in the same subframe.

OFDM symbols in a slot can be classified as 'downlink', 'flexible', or 'uplink'. Signaling of slot formats is described in subclause 11.1 of [5, TS 38.213].

In a slot in a downlink frame, the UE shall assume that downlink transmissions only occur in 'downlink' or 'flexible' symbols.

In a slot in an uplink frame, the UE shall only transmit in 'uplink' or 'flexible' symbols.

A UE not capable of full-duplex communication is not expected to transmit in the uplink earlier than $N_{\text{Rx-Tx}}T_{\text{C}}$, after the end of the last received downlink symbol in the same cell where $N_{\text{Rx-Tx}}$ is given by [TS 38.101].

**[Table 4.3.2-1 of 3GPP TS 38.211 v15.2.0, entitled "Number of OFDM symbols per slot, slots per frame, and slots per subframe for normal cyclic prefix", is reproduced as FIG. 8]**

**[Table 4.3.2-2 of 3GPP TS 38.211 v15.2.0, entitled "Number of OFDM symbols per slot, slots per frame, and slots per subframe for extended cyclic prefix", is reproduced as FIG. 9]**

3GPP TS 38.212 includes the following description:

**7.3.1.3 DCI formats for other purposes**

**7.3.1.3.1 Format 2_0**

DCI format 2_0 is used for notifying the slot format.
The following information is transmitted by means of the DCI format 2_0 with CRC scrambled by SFI-RNTI:

- Slot format indicator 1, Slot format indicator 2, ..., Slot format indicator *N*.

The size of DCI format 2_0 is configurable by higher layers up to 128 bits, according to Subclause 11.1.1 of [5, TS 38.213].

3GPP TS 38.213 includes the following description:

**10.1 UE procedure for determining physical downlink control channel assignment**

A set of PDCCH candidates for a UE to monitor is defined in terms of PDCCH search space sets. A search space set can be a common search space set or a UE-specific search space set. A UE monitors PDCCH candidates in one or more of the following search spaces sets

- a Type0-PDCCH common search space set configured by *searchSpaceZero* in *MasterInformationBlock* or by *searchSpaceSIB1* in *PDCCH-ConfigCommon* for a DCI format with CRC scrambled by a SI-RNTI on a primary cell;

- a Type0A-PDCCH common search space set configured by *searchSpace-OSI* in *PDCCH-ConfigCommon* for a DCI format with CRC scrambled by a SI-RNTI on a primary cell;

- a Type1-PDCCH common search space set configured by *ra-SearchSpace* in *PDCCH-ConfigCommon* for a DCI format with CRC scrambled by a RA-RNTI, or a TC-RNTI on a primary cell;

- a Type2-PDCCH common search space set configured by *pagingSearchSpace* in *PDCCH-ConfigCommon* for a DCI format with CRC scrambled by a P-RNTI on a primary cell;

- a Type3-PDCCH common search space set configured by *SearchSpace* in *PDCCH-Config* with *searchSpaceType = common* for DCI formats with CRC scrambled by INT-RNTI, or SFI-RNTI, or TPC-PUSCH-RNTI, or TPC-PUCCH-RNTI, or TPC-SRS-RNTI and, only for the primary cell, C-RNTI, or CS-RNTI(s); and

- a UE-specific search space set configured by *SearchSpace* in *PDCCH-Config* with *searchSpaceType = ue-Specific* for DCI formats with CRC scrambled by C-RNTI, or CS-RNTI(s).

For each DL BWP configured to a UE in a serving cell, the UE is provided by higher layers with $S \leq 10$ search space sets where, for each search space set from the $S$ search space sets, the UE is provided the following by higher layer parameter *SearchSpace*:

- a search space set index $s$, $0 \leq s < 40$, by higher layer parameter *searchSpaceId*;

- an association between the search space set $s$ and a control resource set $p$ by higher layer parameter *controlResourceSetId;*

- a PDCCH monitoring periodicity of $k_{p,s}$ slots and a PDCCH monitoring offset of $o_{p,s}$ slots, by higher layer parameter *monitoringSlotPeriodicityAndOffset;*

- a PDCCH monitoring pattern within a slot, indicating first symbol(s) of the control resource set within a slot for PDCCH monitoring, by higher layer parameter *monitoringSymbolsWithinSlot;*

- a number of PDCCH candidates $M_{p,s}^{(L)}$ per CCE aggregation level $L$ by higher layer parameters *aggregationLevel1, aggregationLevel2, aggregationLevel4, aggregationLevel8,* and *aggregationLevel16,* for CCE aggregation level 1, CCE aggregation level 2, CCE aggregation level 4, CCE aggregation level 8, and CCE aggregation level 16, respectively;

- an indication that search space set $s$ is either a common search space set or a UE-specific search space set by higher layer parameter *searchSpaceType*;

- if search space set $s$ is a common search space set,

  - an indication by higher layer parameter *dci-Format0-0-AndFormat1-0* to monitor PDCCH candidates for DCI format 0_0 and DCI format 1_0 with CRC scrambled by a C-RNTI or a CS-RNTI (if configured), RA-RNTI, TC-RNTI, P-RNTI, SI-RNTI;

  - an indication by higher layer parameter *dci-Format2-0* to monitor one or two PDCCH candidates for DCI format 2_0 and a corresponding CCE aggregation level;

- an indication by higher layer parameter *dci-Format2-1* to monitor PDCCH candidates for DCI format 2_1;

- an indication by higher layer parameter *dci-Format2-2* to monitor PDCCH candidates for DCI format 2_2;

- an indication by higher layer parameter *dci-Format2-3* to monitor PDCCH candidates for DCI format 2_3;

- if search space set *s* is a UE-specific search space set, an indication by higher layer parameter *dci-Formats* to monitor PDCCH candidate either for DCI format 0_0 and DCI format 1_0, or for DCI format 0_1 and DCI format 1_1.

[...]

### 11.1 Slot configuration

A slot format includes downlink symbols, uplink symbols, and flexible symbols.

For each serving cell

If a UE is provided higher layer parameter *tdd-UL-DL-ConfigurationCommon* and the UE is not provided higher layer parameter *tdd-UL-DL-ConfigurationCommon2,* the UE sets the slot format per slot over a number of slots as indicated by higher layer parameter *tdd-UL-DL-ConfigurationCommon.*

The higher layer parameter *tdd-UL-DL-ConfigurationCommon* provides

- A reference subcarrier spacing $\mu_{\text{ref}}$ by higher layer parameter *referenceSubcarrierSpacing*

- A slot configuration period of *P* msec by higher layer parameter *dl-ULTransmissionPeriodicity*

- A number of slots $d_{\text{slots}}$ with only downlink symbols by higher layer parameter *nrofDownlinkSlots*

- A number of downlink symbols $d_{\text{sym}}$ by higher layer parameter *nrofDownlinkSymbols*

- A number of slots $u_{\text{slots}}$ with only uplink symbols by higher layer parameter *nrofUplinkSlots*

- A number of uplink symbols $u_{\text{sym}}$ by higher layer parameter *nrofUplinkSymbols*

If the UE is provided higher layer parameters *tdd-UL-DL-ConfigurationCommon* and *tdd-UL-DL-ConfigurationCommon2,* the UE sets the slot format per slot over a first number of slots as indicated by higher layer parameter *tdd-UL-DL-ConfigurationCommon* and the UE sets the slot format per slot over a second number of slots as indicated by *tdd-UL-DL-ConfigurationCommon2.*

The higher layer parameter *tdd-UL-DL-ConfigurationCommon2* provides

- A reference subcarrier spacing $\mu_{\text{ref},2}$ by higher layer parameter *referenceSubcarrierSpacing*;

- A slot configuration period of $P_2$ msec by higher layer parameter *dl-ULTransmissionPeriodicity*;

- A number of slots $d_{\text{slots},2}$ with only downlink symbols by higher layer parameter *nrofDownlinkSlots;*

- A number of downlink symbols $d_{\text{sym},2}$ by higher layer parameter *nrofDownlinkSymbols*;

- A number of slots $u_{\text{slots},2}$ with only uplink symbols by higher layer parameter *nrofUplinkSlots;*

- A number of uplink symbols $u_{\text{sym},2}$ by higher layer parameter *nrofUplinkSymbols.*

If the UE is additionally provided higher layer parameter *tdd-UL-DL-ConfigDedicated,* the parameter *tdd-UL-DL-ConfigDedicated* overrides only flexible symbols per slot over the number of slots as provided by *tdd-UL-DL-ConfigurationCommon* or *tdd-UL-DL-ConfigurationCommon2.*

The higher layer parameter *tdd-UL-DL-ConfigDedicated* provides

- A set of slot configurations by higher layer parameter *slotSpecificConfigurationsToAddModList*;

- For each slot configuration from the set of slot configurations

  - A slot index for a slot provided by higher layer parameter *slotIndex*;

  - A set of symbols for a slot by higher layer parameter *symbols* where

    - if *symbols* = *allDownlink,* all symbols in the slot are downlink;

    - if *symbols* = *allUplink,* all symbols in the slot are uplink;

    - if *symbols* = *explicit* and higher layer parameter *nrofDownlinkSymbols* provides a number of downlink first symbols in the slot and higher layer parameter *nrofUplinkSymbols* provides a number of uplink last symbols in the slot. If *nrofDownlinkSymbols* is not provided, there are no downlink first symbols in the slot and if *nrofUplinkSymbols* is not provided, there are no uplink last symbols in the slot. The remaining symbols in the slot are flexible.

### 11.1.1 UE procedure for determining slot format

This subclause applies for a serving cell that is included in a set of serving cells configured to a UE by higher layer parameters *slotFormatCombToAddModList* and *slotFormatCombToReleaseList.*

If a UE is configured by higher layers with parameter *SlotFormatIndicator,* the UE is provided with a SFI-RNTI by higher layer parameter *sfi-RNTI* and with a payload size of DCI format 2_0 by higher layer parameter *dci-PayloadSize.* The UE is also provided in one or more serving cells with a configuration for a search space set *s* and a corresponding control resource set *p* for monitoring $M_{p,s}^{(L_{\mathrm{SFI}})}$ PDCCH candidates for DCI format 2_0 with a CCE aggregation level of $L_{\mathrm{SFI}}$ CCEs as described in Subclause 10.1. The $M_{p,s}^{(L_{\mathrm{SFI}})}$ PDCCH candidates are the first $M_{p,s}^{(L_{\mathrm{SFI}})}$ PDCCH candidates for CCE aggregation level $L_{\mathrm{SFI}}$ for search space set *s* in control resource set *p*.

For each serving cell in the set of serving cells, the UE can be provided:

- an identity of the serving cell by higher layer parameter *servingCellId*

- a location of a SFI-index field in DCI format 2_0 by higher layer parameter *positionInDCI*

- a set of slot format combinations by higher layer parameter *slotFormatCombinations,* where each slot format combination in the set of slot format combinations includes

  - one or more slot formats indicated by a respective higher layer parameter *slotFormats* for the slot format combination, and

  - a mapping for the slot format combination provided by *slotFormats* to a corresponding SFI-index field value in DCI format 2_0 provided by higher layer parameter *slotFormatCombinationId*

  - for unpaired spectrum operation, a reference subcarrier spacing $\mu_{\mathrm{SFI}}$ by higher layer parameter *subcarrierSpacing* and, when a supplementary UL carrier is configured for the serving cell, a reference subcarrier spacing $\mu_{\mathrm{SFI,SUL}}$ by higher layer parameter *subcarrierSpacing2* for the supplementary UL carrier

  - for paired spectrum operation, a reference subcarrier spacing $\mu_{\mathrm{SFI,DL}}$ for a DL BWP by higher layer parameter *subcarrierSpacing* and a reference subcarrier spacing $\mu_{\mathrm{SFI,UL}}$ for an UL BWP by higher layer parameter *subcarrierSpacing2*

A SFI-index field value in a DCI format 2_0 indicates to a UE a slot format for each slot in a number of slots for each DL BWP or each UL BWP starting from a slot where the UE detects the DCI format 2_0. The number of slots is equal to or larger than a PDCCH monitoring periodicity for DCI format 2_0. The SFI-index field includes $\log_2$(maxSFIindex) bits where maxSFIindex is the maximum value of the values provided by corresponding higher layer parameters *slot-FormatCombinationId.* A slot format is identified by a corresponding format index as provided in Table 11.1.1-1 where 'D' denotes a downlink symbol, 'U' denotes an uplink symbol, and 'F' denotes a flexible symbol.

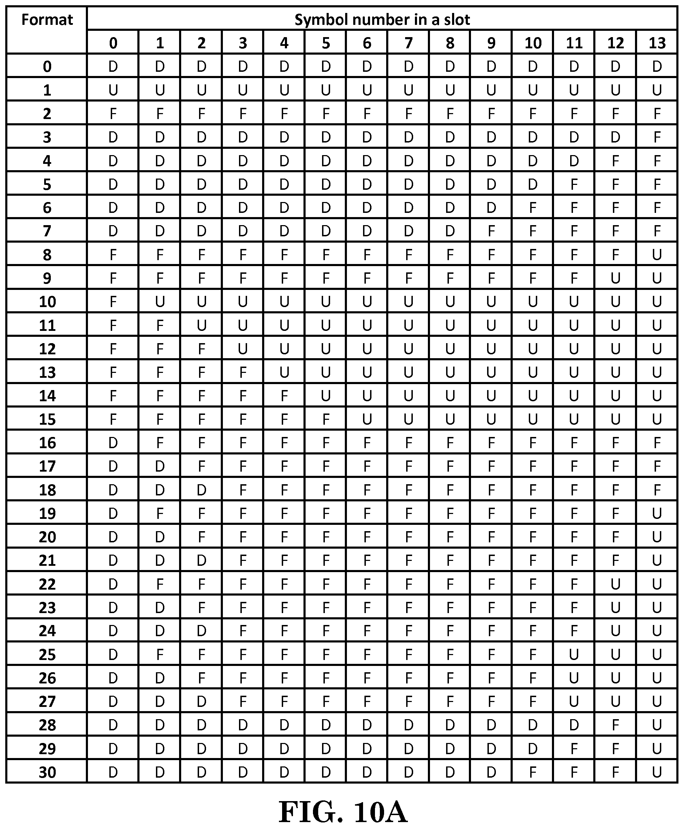

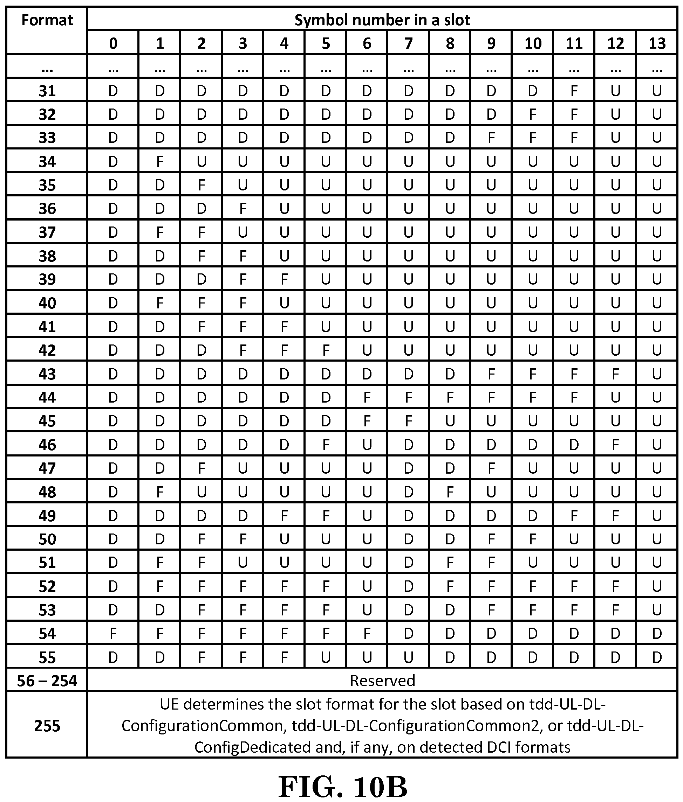

**[Table 11.1.1-1 of 3GPP TS 38.213 v15.2.0, entitled "Slot formats for normal cyclic prefix", is reproduced as FIGS. 10A and 10B]**

For unpaired spectrum operation for a UE on a serving cell, the UE is provided by higher layer parameter *subcarrierSpacing* a reference subcarrier spacing configuration of $\mu_{SFI}$ for each slot format in a combination of slot formats indicated by a SFI-index field value in DCI format 2_0. The UE expects that for a reference subcarrier spacing configuration of $\mu_{SFI}$ and for an active DL BWP and UL BWP pair with subcarrier spacing configuration of $\mu$, it is $\mu \geq \mu_{SFI}$. Each slot format in the combination of slot formats indicated by the SFI-index field value in DCI format 2_0 is applicable to $2^{(\mu-\mu_{SFI})}$ consecutive slots in the active DL BWP and UL BWP pair where the first slot starts at a same time as a first slot for the reference subcarrier spacing configuration of $\mu_{SFI}$ and each downlink or flexible or uplink symbol for the reference subcarrier spacing configuration of $\mu_{SFI}$ corresponds to $2^{(\mu-\mu_{SFI})}$ consecutive downlink or flexible or uplink symbols for the subcarrier spacing configuration $\mu$.

The UE is provided with a reference subcarrier spacing configuration of $\mu_{SFI,DL}$ so that for an active DL BWP with subcarrier spacing configuration of $\mu_{DL}$, it is $\mu_{DL} \geq \mu_{SFI,DL}$. The UE is provided with a reference subcarrier spacing configuration of $\mu_{SFI,UL}$ so that for an active UL BWP with subcarrier spacing configuration of $\mu_{UL}$, it is $\mu_{UL} \geq \mu_{SFI,UL}$. Each slot format for a combination of slot formats indicated by the SFI-index field value in DCI format 2_0 for the reference DL BWP, by indicating a value for *slotFormatCombinationId* that is mapped to a value of *slotFormats* in *slotFormatCombination,* is applicable to $2^{(\mu_{DL}-\mu_{SFI,DL})}$ consecutive slots for the active DL BWP where the first slot starts at a same time as a first slot in the reference DL BWP and each downlink or flexible symbol for the reference subcarrier spacing configuration of $\mu_{SFI,DL}$ corresponds to $2^{(\mu_{DL}-\mu_{SFI,DL})}$ consecutive downlink or flexible symbols for the subcarrier spacing configuration $\mu_{DL}$. Each slot format for the combination of slot formats for the reference UL BWP is applicable to $2^{(\mu_{UL}-\mu_{SFI,UL})}$ consecutive slots for the active UL BWP where the first slot starts at a same time as a first slot in the reference UL BWP and each uplink or flexible symbol for the reference subcarrier spacing configuration of $\mu_{SFI,UL}$ corresponds to $2^{(\mu_{UL}-\mu_{SFI,UL})}$ consecutive uplink or flexible symbols for the subcarrier spacing configuration $\mu_{UL}$.

The UE expects to be provided with a reference subcarrier spacing configuration of $\mu_{SFI,SUL}$ so that for an active UL BWP in the second UL carrier with subcarrier spacing configuration of $\mu_{SUL}$, it is $\mu_{SUL} \geq \mu_{SFI,SUL}$. Each slot format for a combination of slot formats indicated by the SFI-index field in DCI format 2_0 for the reference first UL carrier is applicable to $2^{(\mu-\mu_{SFI})}$ consecutive slots for the active DL BWP and UL BWP pair in the first UL carrier where the first slot starts at a same time as a first slot in the reference first UL carrier. Each slot format for the combination of slot formats for the reference second UL carrier is applicable to $2^{(\mu_{SUL}-\mu_{SFI,SUL})}$ consecutive slots for the active UL BWP in the second UL carrier where the first slot starts at a same time as a first slot in the reference second UL carrier.

For a set of symbols of a slot indicated to a UE as flexible by higher layer parameters *tdd-UL-DL-ConfigurationCommon, tdd-UL-DL-ConfigurationCommon2,* and *tdd-UL-DL-ConfigDedicated,* when provided to the UE, or when higher layer parameters *tdd-UL-DL-ConfigurationCommon, tdd-UL-DL-ConfigurationCommon2,* and *tdd-UL-DL-ConfigDedicated* are not provided to the UE, and if the UE detects a DCI format 2_0 providing a format for the slot using a slot format value other than 255

- If one or more symbols from the set of symbols are symbols in a control resource set configured to the UE for PDCCH monitoring, the UE receives PDCCH in the control resource set only if an SFI-index field value in DCI format 2_0 indicates that the one or more symbols are downlink symbols.

- If an SFI-index field value in DCI format 2_0 indicates the set of symbols of the slot as flexible and the UE detects a DCI format 1_0, DCI format 1_1, or DCI format 0_1indicating to the UE to receive PDSCH or CSI-RS in the set of symbols of the slot, the UE receives PDSCH or CSI-RS in the set of symbols of the slot.

- If an SFI-index field value in DCI format 2_0 indicates the set of symbols of the slot as flexible and the UE detects a DCI format 0_0, DCI format 0_1, DCI format 1_0, DCI format 1_1, or DCI format 2_3 indicating to the UE to transmit PUSCH, PUCCH, PRACH, or SRS in the set of symbols of the slot the UE transmits the PUSCH, PUCCH, PRACH, or SRS in the set of symbols of the slot.

- If an SFI-index field value in DCI format 2_0 indicates the set of symbols of the slot as flexible, and the UE does not detect a DCI format 1_0, DCI format 1_1, or DCI format 0_1 indicating to the UE to receive PDSCH or CSI-RS, or the UE does not detect a DCI format 0_0, DCI format 0_1, DCI format 1_0, DCI format 1_1, or DCI format 2_3 indicating to the UE to transmit PUSCH, PUCCH, PRACH, or SRS in the set of symbols of the slot, the UE does not transmit or receive in the set of symbols of the slot.

- If the UE is configured by higher layers to receive PDSCH or CSI-RS in the set of symbols of the slot, the UE receives the PDSCH or the CSI-RS in the set of symbols of the slot only if an SFI-index field value in DCI format 2_0 indicates the set of symbols of the slot as downlink.

- If the UE is configured by higher layers to transmit PUCCH, or PUSCH, or PRACH in the set of symbols of the slot, the UE transmits the PUCCH, or the PUSCH, or the PRACH in the slot only if an SFI-index field value in DCI format 2_0 indicates the set of symbols of the slot as uplink.

- If the UE is configured by higher layers to transmit periodic SRS in the set of symbols of the slot, the UE transmits the periodic SRS only in a subset of symbols from the set of symbols of the slot indicated as uplink symbols by an SFI-index field value in DCI format 2_0.

- A UE does not expect to detect an SFI-index field value in DCI format 2_0 indicating the set of symbols of the slot as downlink and also detect a DCI format 0_0, DCI format 0_1, DCI format 1_0, DCI format 1_1, or DCI format 2_3 indicating to the UE to transmit SRS, PUSCH, PUCCH, or PRACH, in one or more symbols from the set of symbols of the slot.

- A UE does not expect to detect an SFI-index field value in DCI format 2_0 indicating the set of symbols of the slot as downlink if the set of symbols of the slot includes symbols corresponding to a first repetition of a PUSCH transmission activated by an UL Type 2 grant PDCCH as described in Subclause 10.2.

- A UE does not expect to detect an SFI-index field value in DCI format 2_0 indicating the set of symbols of the slot as uplink and also detect a DCI format 1_0 or DCI format 1_1 or DCI format 0_1 indicating to the UE to receive PDSCH or CSI-RS in one or more symbols from the set of symbols of the slot.

3GPP TS 38.331 includes the following description:

### *SlotFormatCombinationsPerCell*

The IE *SlotFormatCombinationsPerCell* is used to configure the SlotFormatCombinations applicable for one serving cell. Corresponds to L1 parameter 'cell-to-SFI' (see 38.213, section 11.1.1).

### *SlotFormatCombinationsPerCell* information element

```
-- ASN1START
-- TAG-SLOTFORMATCOMBINATIONSPERCELL-START
SlotFormatCombinationsPerCell ::= SEQUENCE {
  servingCellId ServCellIndex,
  subcarrierSpacing ubcarrierSpacing,
  subcarrierSpacing2 ubcarrierSpacing OPTIONAL, -- Need R
  slotFormatCombinations SEQUENCE (SIZE (1..maxNrofSlotFormatCombinationsPerSet))
  OF SlotFormatCombination OPTIONAL,
  positionInDCI INTEGER(0..maxSFI-DCI-PayloadSiz -1) OPTIONAL, ...
  }
SlotFormatCombination ::= SEQUENCE {
  slotFormatCombinationId SlotFormatCombinationId,
  slotFormats SEQUENCE (SIZE (1..maxNrofSlotFormatsPerCombination)) OF
  INTEGER (0..255)
  }
SlotFormatCombinationId ::= INTEGER (0..maxNrofSlotFormatCombinationsPerSet-1)
-- TAG-SLOTFORMATCOMBINATIONSPERCELL-STOP
-- ASN1STOP
- SlotFormatIndicator
```

The IE *SlotFormatIndicator* is used to configure monitoring a Group-Common-PDCCH for Slot-Format-Indicators (SFI).

**SlotFormatIndicator information element**

```
-- ASN1START
-- TAG-SLOTFORMATINDICATOR-START
SlotFormatIndicator ::= SEQUENCE {
  sfi-RNTI RNTI-Value,
  dci-PayloadSiz INTEGER (1..maxSFI-DCI-PayloadSize),
  slotFormatCombToAddModList SEQUENCE (SIZE(1..maxNrofAggregatedCellsPerCellGroup)) OF
  SlotFormatCombinationsPerCell OPTIONAL, -- Need N
  slotFormatCombToReleaseList SEQUENCE (SIZE(1..maxNrofAggregatedCellsPerCellGroup)) OF
  ServCellIndex OPTIONAL, -- Need ...
  }
-- TAG-SLOTFORMATINDICATOR-STOP
-- ASN1STOP
```

| SlotFormatIndicator field descriptions |
|---|
| **dci-PayloadSize** <br> Total length of the DCI payload scrambled with SFI-RNTI. Corresponds to L1 parameter 'SFI-DCI-payload-length' (see 38.213, section 11.1.1) |
| **sfi-RNTI** <br> RNTI used for SFI on the given cell Corresponds to L1 parameter 'SFI-RNTI' (see 38.213, section 11.1.1) |
| **slotFormatCombToAddModList** <br> A list of SlotFormatCombinations for the UE's serving cells. Corresponds to L1 parameter 'SFI-cell-to-SFI' (see 38.213, section 11.1.1) |

One or multiple of following terminologies may be used hereafter:

- *BS:* A network central unit or a network node in NR which is used to control one or multiple TRPs which are associated with one or multiple cells. Communication between BS and TRP(s) is via fronthaul. BS could also be referred to as central unit (CU), eNB, gNB, or NodeB.

- *TRP*: A transmission and reception point provides network coverage and directly communicates with UEs. TRP could also be referred to as distributed unit (DU) or network node.

- *Cell*: A cell is composed of one or multiple associated TRPs, i.e. coverage of the cell is composed of coverage of all associated TRP(s). One cell is controlled by one BS. Cell could also be referred to as TRP group (TRPG).

- *Serving beam*: A serving beam for a UE is a beam generated by a network node, e.g. TRP, which is currently used to communicate with the UE, e.g. for transmission and/or reception.

- *Candidate beam*: A candidate beam for a UE is a candidate of a serving beam. Serving beam may or may not be candidate beam.

For now, NR (New RAT/Radio) technology has been developed to a stable stage. Beam forming technology and wider bandwidth used compared to LTE bring a high enhancement on traffic rate. However, NR technology is focusing on transmission/reception in licensed spectrum. For a higher traffic date rate foreseen to be used for service demand in the future, NR applied in unlicensed spectrum also shows appealing and plays an important role, as LAA in LTE.

For a wireless node operating in an unlicensed spectrum, a clear channel assessment or an LBT (Listen Before Talk) procedure to make sure that the unlicensed channel is clear or idle, which means no other wireless node(s) are transmitting in the unlicensed spectrum. If the clear channel assessment or the LBT procedure is completed successfully, the wireless node can transmit in the unlicensed spectrum or channel for a channel occupancy time. Since the timing for completing successfully a clear channel assessment or an LBT procedure is not fixed, the slot structure of slots within the channel occupancy time, the starting slot, and the ending slot and/or position of the ending symbol is also uncertain until a clear channel assessment or an LBT procedure is completed successfully. For NR operated in licensed spectrum, one of issues needed to tackle is that how to indicate UE the structure of TTIs or slot structure within a channel occupancy time. To be more specific, to indicate the transmission direction or functionality of symbols within a channel occupancy time, which slot is ending slot (i.e. last slot in a channel occupancy time), the position of ending symbol (i.e. the last symbol in the ending slot). In general, the present invention discusses how to indicate information of an ending slot and/or ending symbol.

Currently, a SFI (Slot Format Indication) indication method has been introduced to NR. On a configured SFI monitoring occasion, UE may detect an SFI-DCI (SFI-Downlink Control Information), which is a DCI indicating a (preconfigured or predetermined) slot format combination for the serving cell, e.g. DCI format 2_0. The slot format combination may comprise one or more slot format values for one or more slots. Each slot format value is predetermined or preconfigured to indicate transmission direction or functionality of each symbol within a slot. A slot format value may indicate a symbol within a slot as "D", "U" and "F", which means downlink symbol, uplink symbol and flexible symbol respectively.

An SFI-DCI can indicate a slot format combination for a group of UE, which means the indicated slot format combination can be applied for the group of UE. However, subcarrier spacing (SCS) configurations of active BWP (Bandwidth Part) of each UE among the group may be different. Since time length of a symbol or slot is associated with SCS, different understanding of indicated time duration of the indicated slot format combination may occur if each UE among the group interprets the slot format combination using its own SCS configuration of active BWP. Hence, a reference SCS is configured for each UE to interpret the slot format combination, that is, each UE receiving a same slot format combination value uses a same SCS value (i.e. reference SCS) to interpret the slot format combination.

Since the SFI indication method has been introduced to indicate slot structure in licensed spectrum, it should be also suitable for indicating slot structure of ending slot within a channel occupancy time in unlicensed spectrum. However, for indicating ending slot and/or ending symbol within a channel occupancy time, one issue would occur if using existing SFI indication method in NR Rel. 15. Since in NR Rel. 15, there is no concept for ending slot and ending symbol in licensed spectrum. The existing SFI structure may not provide the purpose for indicating ending slot and/or ending symbol.

For easier analysis, a slot for reference SCS is denoted as a reference slot and a symbol in a reference slot is denoted as reference symbol. For example, if reference SCS is 30 kHz, then, 1 ms may comprise two reference slots, which means 1 ms comprises 28 reference symbols.

This issue deserves to be resolved. Otherwise, UE is not able to realize position of ending symbol or position of a symbol after which UE considers a channel occupancy time is ended; similarly, network node is unable to indicate UE the accurate ending symbol or a symbol after which UE should consider a channel occupancy time is ended.

In the present invention, the following general solutions or embodiments are provided, which can be at least (but not limited to) used to handle: (i) at least for how network node can indicate UE the position, functionality and/or transmission direction of an ending symbol and/or ending slot, (ii) for UE to realize the position, functionality and/or transmission direction of an ending symbol and/or ending slot.

The general concepts described below can be applied for all the following embodiments.

In one embodiment, after (the end of) a ending slot, the UE may not receive configured data channel (and/or transmit configured data channel) until the UE detects next channel occupancy by network node or until the UE receives a transmission from network node or until the UE performs a clear channel assessment or a LBT procedure (successfully). Furthermore, after (the end of) an ending slot, the UE may not receive configured RS for channel measurement (and/or transmit configured RS for channel measurement) until the UE detects next channel occupancy by network node or until the UE receives a transmission from network node or until the UE performs a clear channel assessment or a LBT procedure (successfully). In addition, after (the end of) a ending slot, the UE may not monitor and/or detect configured CORESET(s) (Control Resource Set) until the UE detects next channel occupancy by network node or until the UE receives a transmission from network node or until the UE performs a clear channel assessment or a LBT procedure (successfully). Also, after (the end of) a ending slot, the UE may not transmit PRACH (Physical Random Channel) on a configured PRACH transmission occasion until the UE detects next channel occupancy by network node or until the UE receives a transmission from network node or until the UE performs a clear channel assessment or an LBT procedure (successfully).

In one embodiment, after (the end of) a ending symbol, the UE may not receive configured data channel (and/or transmit configured data channel) until the UE detects next channel occupancy by network node or until the UE receives a transmission from network node or until the UE performs a clear channel assessment or a LBT procedure (successfully). Furthermore, after (the end of) a ending symbol, the UE may not receive configured RS (Reference Signal) for channel measurement (and/or transmit configured RS for channel measurement) until the UE detects next channel occupancy by network node or until the UE receives a transmission from network node or until the UE performs a clear channel assessment or a LBT procedure (successfully). In addition, after (the end of) a ending symbol, the UE may not monitor and/or detect configured CORESET(s) until the UE detects next channel occupancy by network node or until the UE receives a transmission from network node or until the UE performs a clear channel assessment or a LBT procedure (successfully). Also, after (the end of) a ending symbol, the UE may not transmit PRACH on configured PRACH transmission occasion until the UE detects next channel occupancy by network node or until the UE receives a transmission from network node or until the UE performs a clear channel assessment or a LBT procedure (successfully).

In one embodiment, a channel occupancy time could be a time duration where a wireless node transmits without performing another one channel access procedure or another one channel access procedure with random access mechanism after the wireless node performs a channel access procedure or LBT scheme (successfully). Within a channel occupancy time, a wireless node could perform transmission and/or reception (continuously). Furthermore, within a channel occupancy time, a wireless node may assume transmission/reception (on a time duration) is the same as licensed band or spectrum. In addition, within a channel occupancy time, a wireless node may assume slot format or frame structure could be determined based on RRC signaling(s), e.g. *tdd-UL-DL-ConfigurationCommon, tdd-UL-DL-ConfigurationCommon2, tdd-UL-DL-ConfigDedicated.* Also, within a channel occupancy time, a wireless node may perform transmission/reception same as licensed band or spectrum.

Preferably, a channel occupancy could mean that a wireless node performs transmission in unlicensed spectrum and/or unlicensed channel for channel occupancy time after a successful channel access procedure and/or LBT scheme. A UE could detect a channel occupancy (time) from or by the network node means the UE detects or realizes that the network node (currently) is allowed to perform transmission (continuously) for a time period (channel occupancy time) after a successfully channel access procedure and/or LBT scheme. A network node could detect a channel occupancy (time) from or by a serving UE means network node detects or realizes that the serving UE (currently) is allowed to perform transmission (continuously) for a time period (channel occupancy time) after a successfully channel access procedure and/or LBT scheme.

The following embodiments for a UE can apply for network node. The following embodiments for network node can apply for a UE. Throughout the present application, a symbol for a SCS (Service Capability Server) or a symbol based on a SCS could mean that time length of the symbol may be based on the SCS. A slot for a SCS or a slot based on a SCS could mean that time length of the slot may be based on the SCS. A slot for a TTI or a slot based on a SCS could mean that time length of the TTI may be based on the SCS. An unlicensed cell may be a serving cell operated or located in unlicensed spectrum. A slot for reference SCS can be denoted as a reference slot. A symbol for reference SCS in a reference slot can be denoted as reference symbol. A TTI for reference SCS in a reference slot can be denoted as reference TTI.

*Embodiment 1* - A UE (is configured to) receive and/or monitor a slot format related DCI indicating or carrying a slot format combination, wherein the slot format combination comprises one or more slot format values. Preferably, the UE could receive and/or monitor the slot format related DCI within a channel occupancy time. The slot format combination may be for a channel occupancy time or for an unlicensed cell. More specifically, the slot format combination may be for the channel occupancy time in the unlicensed cell.

Preferably, one or more slot format values in the slot format combination may be used to indicated information of one or more TTIs (Transmission Time Interval) or slot. throughout the present application, a slot may be referred to or replaced with a TTI (or other type of TTI, e.g. symbol, mini-slot, subframe, frame). The slot format related DCI may be referred to or replaced with a signal, wherein the signal could be for indicating information of one or multiple TTIs of the unlicensed cell. The information of one or multiple TTIs could be slot format combination. The information of one or multiple TTIs could be one or multiple slot format values (comprised in slot format combination), and vice versa.

Preferably, the UE could receive and/or monitor the slot format related DCI in unlicensed spectrum. Preferably, the UE could receive and/or monitor the slot format related DCI in licensed spectrum. Preferably, the slot format combination could be applied to an unlicensed spectrum. Preferably, the slot format combination could be applied to a licensed spectrum. In particular, the UE could receive and/or monitor the slot format related DCI in licensed spectrum, wherein the slot format related DCI is applied in unlicensed spectrum.

Preferably, the one or more slot format values comprised in the slot format combination may indicate slot formats for slots within the channel occupancy time. The one or more slot format values comprised in the slot format combination may also indicate transmission direction and/or functionality for each symbol (or most of symbols) in slots within the channel occupancy time. Furthermore, the one or more slot format values comprised in the slot format combination may also (at least) indicate a symbol is "downlink" or "uplink" or "flexible" or "blank".

Preferably, if the slot format combination is for licensed spectrum, the one or more slot format values comprised in the slot format combination may (at least) indicate a symbol is "downlink" or "uplink" or "flexible". Preferably, if the slot format combination is for unlicensed spectrum, the one or more slot format values comprised in the slot format combination may (at least) indicate a symbol is "downlink" or "uplink" or "flexible" or "blank".

Preferably, if the slot format combination is for a serving cell in unlicensed spectrum, one slot format value in the slot format combination may indicate a symbol is as "blank". Preferably, if the slot format combination is for licensed spectrum, the one or more slot format values comprised in the slot format combination does not or is not allowed to indicate a symbol is "blank". If the slot format combination is for licensed spectrum, the UE may not expect to indicate a symbol as "blank".

Preferably, if a symbol is indicated as "downlink", the symbol could be for downlink transmission. If a symbol is indicated as "uplink", the symbol could be for uplink transmission. If a symbol is indicated as "flexible", the symbol could be for either downlink transmission or uplink transmission is determined based on (further) indicating from network node, if any.

If a symbol is indicated as "flexible", the UE may not transmit or receive on the symbol if no (further) indicating from network node. If a symbol is indicated as "blank", the UE may not perform transmission or reception on the symbol. Furthermore, if a symbol is indicated as "blank", the UE may not transmit physical channel and/or RS indicated (or configured) by network node on the symbol, and/or may not receive physical channel and/or RS indicated (or configured) by network node on the symbol. Preferably, if a symbol is indicated as "blank", the UE may not receive physical channel and/or RS indicated (or configured) by network node on the symbol, except for an indicator or signal. Furthermore, if a symbol is indicated as "blank", the UE may not receive physical channel and/or RS indicated (or configured) by network node on the symbol, except for performing a clear channel assessment and/or LBT scheme. In addition, if a symbol is indicated as "blank", the UE may perform a clear channel assessment and/or LBT scheme on the symbol.

Preferably, "blank" can be replaced with or referred to "reserved", "empty", "unoccupied", or other names, not limited to "blank". A symbol indicated as "blank" can be used to derive or indicate an ending slot and/or symbol in the channel occupancy time.

Preferably, the indicator or signal may indicate the UE that network node occupy an unlicensed channel. Furthermore, the indicator or signal may indicate the UE that network node performs a clear channel assessment and/or LBT scheme (successfully).

Preferably, "downlink" can be denoted as "D", "uplink" can be denoted as "U", "flexible" can be denoted as "F", and "blank" can be denoted as "B".

Preferably, the UE could interpret slot format values comprised in the slot format combination at least based on a reference SCS. The UE could interpret slot format values comprised in the slot format combination at least based on a SCS configured for active DL BWP. An SCS configured for active DL BWP can be denoted as an actual DL SCS. The UE could interpret slot format values comprised in the slot format combination at least based on the reference SCS and the actual DL SCS.

Preferably, the UE could derive slot structure of an ending slot within the channel occupancy time from a slot format value indicated or carried in the slot format combination. The slot format value may be the last slot format value indicated in the slot format combination. The UE could also derive which one slot is the ending slot within the channel occupancy time from the slot format value. Furthermore, the UE could derive transmission direction and/or functionality of each symbol (or some of symbols) in the ending slot within the channel occupancy time at least from the slot format value.

Preferably, the UE could consider or interpret that a slot, with one of symbols indicated as "B" in the slot format value or the slot format combination, is the ending slot (within the channel occupancy time). The UE could also consider or interpret that a slot for the reference SCS, with one of symbols indicated as "B" in the slot format value or the slot format combination, is the ending slot (within the channel occupancy time). In addition, the UE could consider or interpret that a slot for the actual DL SCS, with one of symbols indicated as "B", is the ending slot (within the channel occupancy time). Furthermore, the UE could consider or interpret that a slot for the actual DL SCS, with one of symbols corresponding to a symbol for the reference SCS indicated as "B" in the slot format value, as the ending slot (within the channel occupancy time).

Preferably, the UE could consider or interpret that a slot, with one of symbols indicated as "B" in the slot format combination, is the ending slot (within the channel occupancy time), unless receiving another one slot format combination for the unlicensed cell. The UE could also consider or interpret that a slot for the reference SCS, with one of symbols indicated as "B" in the slot format combination, is the ending slot (within the channel occupancy time), unless receiving another one slot format combination for the unlicensed cell. Furthermore, the UE could consider or interpret that a slot for the actual DL SCS, with one of symbols indicated as "B", is the ending slot (within the channel occupancy time), unless receiving another one slot format combination for the unlicensed cell. In addition, the UE could consider or interpret that a slot for the actual DL SCS, with one of symbols corresponding to a symbol for the reference SCS indicated as "B" in the slot format combination, as the ending slot (within the channel occupancy time), unless receiving another one slot format combination for the unlicensed cell.

Preferably, the UE could consider or interpret that a slot, with one of symbols indicated as "B" in the last slot format value in the slot format combination, is the ending slot (within the channel occupancy time), unless receiving another one slot format combination for the unlicensed cell. The UE could also consider or interpret that a slot for the reference SCS, with one of symbols indicated as "B" in the last format value in the slot format combination, is the ending slot (within the channel occupancy time), unless receiving another one slot format combination for the unlicensed cell. Furthermore, the UE could consider or interpret that a slot for the actual DL SCS, with one of symbols indicated as "B" in the last format value in the slot format combination, is the ending slot (within the channel occupancy time), unless receiving another one slot format combination for the unlicensed cell. In addition, the UE could consider or interpret that a slot for the actual DL SCS, with one of symbols corresponding to a symbol for the reference SCS indicated as "B" in the last slot format value in the slot format combination, as the ending slot (within the channel occupancy time), unless receiving another one slot format combination for the unlicensed cell.

Preferably, the UE could derive an information of an ending symbol at least from the slot format value. The information of an ending symbol may comprise an indication of which symbol is the ending symbol. The information of an ending symbol may comprise the transmission direction and/or functionality of the ending symbol.

Preferably, the UE could consider or interpret that the last symbol, indicated as "D" or "U" or "F" in the slot format value or the slot format combination, is the ending symbol (within the channel occupancy time). The UE could also consider or interpret that the last symbol for the actual DL SCS, which is indicated as "D" or "U" or "F", is the ending symbol (within the channel occupancy time). Furthermore, the UE could consider or interpret that the last symbol for the actual DL SCS, which is corresponding to the last symbol for the reference SCS indicated as "D" or "U" or "F" in the slot format value, as the ending symbol (within the channel occupancy time). In addition, the UE could consider or interpret that the last symbol, indicated as "D" or "U" or "F" in the slot format value or the slot format combination, is the ending symbol (within the channel occupancy time), unless receiving another one slot format combination for the unlicensed cell.

Preferably, the UE could consider or interpret that the last symbol for the actual DL SCS, which is indicated as "D" or "U" or "F", is the ending symbol (within the channel occupancy time), unless receiving another one slot format combination for the unlicensed cell. The UE could also consider or interpret that the last symbol for the actual DL SCS, which is corresponding to the last symbol for the reference SCS indicated as "D" or "U" or "F" in the slot format value, as the ending symbol (within the channel occupancy time), unless receiving another one slot format combination for the unlicensed cell.

For example, assume the actual DL SCS is 30 kHz and the reference SCS is 15 kHz; the slot format value for reference SCS indicates "(D, D, D, F, F, F, F, D, D, D, D, B, B, B, B", which corresponds to two slots for the actual DL SCS: "(D, D, D, D, D, D, F, F, F, F, F, F, F, F)" and "(D, D, D, D, D, D, *D, D*, B, B, B, B, B, B)". In the same example, the slot for the actual DL SCS with one of symbols indicated as "B" in the slot format value is the second slot. Hence, the second slot is the ending slot. In the same example, the last symbol for the reference SCS indicated as "D" or "U" in the slot format value is the last to fourth symbol, i.e. symbol #10, which is indicated as "D" (marked as bold and italic). The symbols for the actual DL SCS corresponding to the symbol #10 for the reference SCS in the slot format value are the seventh and eighth symbol (symbol #6 and symbol #7) in the second corresponded slot for the actual DL SCS (marked as bold and italic). Therefore, symbol #7 in the second corresponded slot for the actual DL SCS is the last symbol for the actual DL SCS, which is corresponding to the last symbol for the reference SCS indicated as "D" or "U" in the slot format value. In other words, the UE considers or interprets symbol #7 (starting from symbol #0) in the second corresponded slot is the ending symbol and its transmission direction or functionality is "D".

*Embodiment 2* - A UE (is configured to) receive and/or monitor a slot format related DCI indicating or carrying a slot format combination, wherein the slot format combination comprises one or more slot format values. Preferably, the UE could receive and/or monitor the slot format related DCI within a channel occupancy time. The slot format combination could be for a channel occupancy time or an unlicensed cell. In particular, the slot format combination could be for the channel occupancy time in the unlicensed cell.

Preferably, one or more slot format values in the slot format combination may be used to indicate information of one or more TTIs or slot. Also, throughout the present application, a slot may be referred to or replaced with a TTI (or other type of TTI, e.g. symbol, mini-slot, subframe, frame), vice versa.

Preferably, the slot format related DCI may be referred to or replaced with a signal, wherein, preferably, the signal is for indicating information of one or multiple TTIs of the unlicensed cell. The information of one or multiple TTIs could be slot format combination. The information of one or multiple TTIs could be one or multiple slot format values (comprised in slot format combination).

Preferably, the UE could receive and/or monitor the slot format related DCI in unlicensed spectrum. Preferably, the UE could receive and/or monitor the slot format related DCI in licensed spectrum. The slot format combination could be applied for unlicensed spectrum. Preferably, the slot format combination could be applied for licensed spectrum. The UE could receive and/or monitor the slot format related DCI in licensed spectrum, wherein the slot format related DCI is applied in unlicensed spectrum.

Preferably, the one or more slot format values comprised in the slot format combination may indicate slot formats for slots within the channel occupancy time. The one or more slot format values comprised in the slot format combination may also indicate transmission direction and/or functionality for each symbol (or most of symbols) in slots within the channel occupancy time.

Preferably, the one or more slot format values comprised in the slot format combination may (at least) indicate a symbol is "downlink" or "uplink" or "flexible". If a symbol is indicated as "downlink", the symbol could be for downlink transmission. If a symbol is indicated as "uplink", the symbol could be for uplink transmission. If a symbol is indicated as "flexible", the symbol could be for either downlink transmission or uplink transmission is determined based on (further) indicating from network node, if any. If a symbol is indicated as "flexible", the UE may not transmit or receive on the symbol if no (further) indicating from network node. "Downlink" can be denoted as "D"; "uplink" can be denoted as "U"; and "flexible" can be denoted as "F".

Preferably, the UE could interpret slot format values comprised in the slot format combination at least based on a reference SCS. The UE could also interpret slot format values comprised in the slot format combination at least based on a SCS configured for active DL BWP. A SCS configured for active DL BWP can be denoted as an actual DL SCS. The UE could interpret slot format values comprised in the slot format combination at least based on the reference SCS and the actual DL SCS.

Preferably, the UE could derive slot structure of an ending slot within the channel occupancy time from a slot format value indicated or carried in the slot format combination. The slot format value could be the last slot format value indicated in the slot format combination. The UE could derive which slot is the ending slot within the channel occupancy time from the slot format value. The UE could also derive transmission direction and/or functionality of each symbol (or some of symbols) in the ending slot within the channel occupancy time at least from the slot format value.

Preferably, the slot format value could indicate a special symbol pattern. The special symbol pattern could be a symbol pattern or combination that beyond the UE's capability to perform it. The special symbol pattern may comprise one "downlink" symbol followed by an "uplink" symbol. In particular, the special symbol pattern may comprise one "downlink" symbol for the reference SCS followed by an "uplink" symbol for the reference SCS. Preferably, the special symbol pattern may comprise one "downlink" symbol for the actual SCS followed by an "uplink" symbol for the actual SCS. A possible example for the special symbol pattern could be "(D, U)". A possible example for the slot format value could be "(D, D, D, F, F, F, F, D, D, D, *D*, *U*, U, U, U)", wherein the special symbol pattern is marked as bold and italic. Another one possible example for the slot format value could be "(U, U, U, U, U, U, U, *D*, *U*, U, U, U, U, U, U)", wherein the special symbol pattern is marked as bold and italic.

In one example, the special symbol pattern may be (only) present or indicated for unlicensed spectrum. The special symbol pattern may not be present or not indicated for licensed spectrum. If the slot symbol format combination is for licensed spectrum, the UE may not expect to be indicated a symbol special symbol pattern in the slot format combination.

Preferably, for a symbol for active DL SCS corresponding to symbol(s) for the reference SCS after the special symbol pattern, the UE may not transmit or receive on the symbol. Also, for a symbol for active DL SCS corresponding to symbol(s) for the reference SCS after the special symbol pattern, the UE may not transmit physical channel and/or RS indicated (or configured) by network node on the symbol, and/or may not receive physical channel and/or RS indicated (or configured) by network node on the symbol. In addition, for a symbol for active DL SCS corresponding to symbol(s) for the reference SCS after the special symbol pattern, the UE may not receive physical channel and/or RS indicated (or configured) by network node on the symbol, except for an indicator or signal. In particular, for a symbol for active DL SCS corresponding to symbol(s) for the reference SCS after the special symbol pattern, the UE may not receive physical channel and/or RS indicated (or configured) by network node on the symbol, except for performing a clear channel assessment and/or LBT scheme. Furthermore, for a symbol for active DL SCS corresponding to symbol(s) for the reference SCS after the special symbol pattern, the UE may perform a clear channel assessment and/or LBT scheme on the symbol.

Preferably, the indicator or signal may indicate the UE that network node occupy an unlicensed channel. The indicator or signal may also indicate the UE that network node performs a clear channel assessment and/or LBT scheme (successfully).

Preferably, the UE could consider or interpret that a slot, comprising the special symbol pattern indicated in the slot format value, is the ending slot (within the channel occupancy time). The UE could also consider or interpret that a slot for the reference SCS, comprising the special symbol pattern indicated in the slot format value, is the ending slot (within the channel occupancy time). Furthermore, the UE could consider or interpret that a slot for the actual DL SCS, comprising the special symbol pattern indicated in the slot format value, is the ending slot (within the channel occupancy time). In particular, the UE could consider or interpret that a slot for the actual DL SCS, comprising the special symbol pattern when corresponding to a slot for the reference SCS in the slot format value, as the ending slot (within the channel occupancy time). In addition, the UE could consider or interpret that a slot, comprising the special symbol pattern indicated in the slot format value, is the ending slot (within the channel occupancy time), unless receiving another one slot format combination for the unlicensed cell. More specifically, the UE could consider or interpret that a slot for the reference SCS, comprising the special symbol pattern indicated in the slot format value, is the ending slot (within the channel occupancy time), unless receiving another one slot format combination for the unlicensed cell.

Preferably, the UE could consider or interpret that a slot for the actual DL SCS, comprising the special symbol pattern indicated in the slot format value, is the ending slot (within the channel occupancy time), unless receiving another one slot format combination for the unlicensed cell. The UE could also consider or interpret that a slot for the actual DL SCS, comprising the special symbol pattern when corresponding to a slot for the reference SCS in the slot format value, is the ending slot (within the channel occupancy time), unless receiving another one slot format combination for the unlicensed cell.

Preferably, the UE could derive an information of an ending symbol at least from the slot format value. The information of an ending symbol may comprise which symbol is the ending symbol. The information of an ending symbol may also comprise the transmission direction and/or functionality of the ending symbol.

Preferably, the UE could consider or interpret that the nearest symbol, prior to the special symbol pattern, is the ending symbol (within the channel occupancy time). The UE could also consider or interpret that the nearest symbol for the actual DL SCS, prior to the special symbol pattern, is the ending symbol (within the channel occupancy time). Furthermore, the UE could consider or interpret that the last symbol for the actual DL SCS, which is corresponding a nearest symbol for the reference SCS prior to the special symbol pattern, as the ending symbol (within the channel occupancy time).

Preferably, the UE could consider or interpret that the nearest symbol, prior to the special symbol pattern, is the ending symbol (within the channel occupancy time), unless receiving another one slot format combination for the unlicensed cell. The UE could also consider or interpret that the nearest symbol for the actual DL SCS, prior to the special symbol pattern, is the ending symbol (within the channel occupancy time), unless receiving another one slot format combination for the unlicensed cell. Furthermore, the UE could consider or interpret that the last symbol for the actual DL SCS, which is corresponding a nearest symbol for the reference SCS prior to the special symbol pattern, as the ending symbol (within the channel occupancy time), unless receiving another one slot format combination for the unlicensed cell.

For example, assuming the actual DL SCS is 30 kHz and the reference SCS is 15 kHz; the slot format value for reference SCS indicates "(D, D, D, F, F, F, F, D, D, D, D, *D*, *U*, U", which corresponds to two slots for the actual DL SCS: "(D, D, D, D, D, D, F, F, F, F, F, F, F, F)" and "(D, D, D, D, D, D, D, D, *D*, *D*, *U*, *U*, U, U)". In the same example, the slot for the actual DL SCS with the special symbol pattern is the second slot. Hence, the second slot is the ending slot.

In the same example, possible examples of the ending symbol could be as follows:

1. The nearest symbol for the reference SCS prior to the special symbol pattern could be the fourth last symbol, i.e. symbol #10 for the reference SCS, which is indicated as "D" prior to the special symbol pattern. The symbols for the actual DL SCS corresponding to the symbol #10 for the reference SCS in the slot format value are the seventh and eighth symbol (symbol #6 and symbol #7) in the second corresponded slot for the actual DL SCS (marked as bold and italic). Hence, symbol #7 in the second corresponded slot for the actual DL SCS is the last symbol for the actual DL SCS, which is corresponding to the nearest symbol for the reference SCS prior to the special symbol pattern. In other words, the UE considers or interprets symbol #7 (starting from symbol #0) in the second corresponded slot is the ending symbol and its transmission direction or functionality is "D".

2. The nearest symbol for the actual SCS prior to the special symbol pattern could be the sixth last symbol, i.e. symbol #8 for the actual SCS in the second slot for the actual SCS. The special symbol pattern is the fifth last symbol and the fourth last symbol in the second slot for the actual SCS. In other words, the UE considers or interprets symbol #8 (starting from symbol #0) in the second corresponded slot is the ending symbol and its transmission direction or functionality is "D".

*Embodiment 3* - A UE (is configured to) receive and/or monitor an indication. The UE could derive an information of an ending symbol at least from the indication. The UE could also derive which one slot is an ending slot within a channel occupancy time from the indication. Furthermore, the UE could derive from the indication that which one slot is an ending slot within a channel occupancy time in an unlicensed cell. In addition, the UE could derive slot structure of the ending slot (within the channel occupancy time) from the indication. Also, the UE could derive from the indication that slot structure of the ending slot within the channel occupancy time in the unlicensed cell. The indication could be a slot format indicator or a slot format combination, which comprises one or more slot format values.

Preferably, one or more slot format values in the slot format combination may be used to indicated information of one or more TTIs or slot. Throughout the present application, a slot may be referred to or replaced with a TTI (or other type of TTI, e.g. symbol, mini-slot, subframe, frame), vice versa. The slot format related DCI may be referred to or replaced with a signal, wherein the signal may be for indicating information of one or multiple TTIs of the unlicensed cell.

Preferably, the information of one or multiple TTIs could be slot format combination. Also, the information of one or multiple TTIs could be one or multiple slot format values (comprised in slot format combination).

Preferably, the UE may receive a DCI scheduling a resource for transmission or reception (in the unlicensed cell), wherein the last symbol of the scheduled resource is after the ending symbol indicated or derived from the indication and before next slot boundary. The last symbol of the scheduled resource may be after the ending symbol indicated or derived from the indication and before next slot boundary.

Preferably, the UE may receive a DCI scheduling a resource for transmission or reception, wherein the last symbol of the resource is after the ending symbol indicated or derived from the indication and before slot boundary of the ending slot and the next slot of the ending slot, wherein the ending slot is indicated or derived from the indication. The UE may also receive a DCI scheduling a resource for transmission or reception, wherein the last symbol of the resource is after the ending symbol indicated or derived from the indication and is within the ending slot indicated or derived from the indication.

Preferably, the DCI can be used to derive information of an ending symbol and/or an ending slot (within the channel occupancy time). The ending symbol derived from the DCI could overwrite the ending symbol derived from the indication if an ending symbol (within the channel occupancy time) derived or indicated before receiving the DCI. The ending symbol derived from the DCI could also overwrite the ending symbol derived from the indication if the ending symbol derived from the DCI is later than the ending symbol derived from the indication.

Preferably, if a UE monitors and/or receives the DCI, wherein the DCI can be used to derive information of an ending symbol and/or an ending slot, and the ending symbol derived from the DCI is later than or equal to the ending symbol derived from the indication, the UE could consider the ending symbol derived from the signal as ending of channel occupancy time. Preferably, if a UE monitors and/or receives the DCI, wherein the DCI can be used to derive information of an ending symbol and/or an ending slot, and the ending symbol derived from the DCI is earlier than the ending symbol derived from the indication, the UE could consider the ending symbol derived from the indication as ending of channel occupancy time.

Preferably, the UE could consider the DCI as being valid. Furthermore, the UE may not neglect or ignore the DCI. In addition, UE could perform transmission or reception on the resource indicated in the DCI. The UE may receive the DCI before the indication. Alternatively, the UE may receive the DCI after the indication.

Preferably, if the UE receives a DCI scheduling a resource for transmission or reception (in the unlicensed cell), wherein the last symbol of the resource is outside or after the ending slot indicated or derived before receiving the DCI, the UE could neglect or ignore the DCI and may not perform transmission or reception on the resource indicated in the DCI. Preferably, if the UE receives a DCI scheduling a resource for transmission or reception (in the unlicensed cell), wherein the last symbol of the resource is outside or after the ending slot indicated or derived from the indication, the UE could neglect or ignore the DCI and may not perform transmission or reception on the resource indicated in the DCI.

Preferably, the UE could consider the last symbol of the scheduled resource as an ending symbol (within the channel occupancy time). More specifically, the UE could consider the last symbol of the scheduled resource as an ending symbol (within the channel occupancy time) regardless of the indication. Preferably, the UE could consider the last symbol of the scheduled resource as an ending symbol (within the channel occupancy time) if the last symbol of the scheduled resource is later than or equal to the ending symbol derived from the indication.

Preferably, the ending symbol derived from the scheduled resource could overwrite the ending symbol (within the channel occupancy time) derived from the indication if the ending symbol derived from the scheduled resource is later than the ending symbol derived from the indication. Furthermore, if the ending symbol derived from the scheduled resource is later than the ending symbol (within the channel occupancy time) derived from the indication, the UE could consider the ending symbol derived from the scheduled resource as ending of the channel occupancy time. Preferably, if the ending symbol derived from the scheduled resource is earlier than the ending symbol (within the channel occupancy time) derived from the indication, the UE could consider the ending symbol derived from the indication as ending of the channel occupancy time.

Preferably, for a time gap between the ending symbol derived from the indication and the ending symbol derived from the scheduled resource, the UE could perform data transmission or data reception. Furthermore, for a time gap between the ending symbol derived from the indication and the ending symbol derived from the scheduled resource, the UE may not perform configured RS reception at least for channel measurement (and/or configured RS transmission at least for channel measurement). In addition, for a time gap between the ending symbol derived from the indication and the ending symbol derived from the scheduled resource, the UE may not monitor and/or detect configured CORESET(s). In particular, for a time gap between the ending symbol derived from the indication and the ending symbol derived from the scheduled resource, the UE may not monitor and/or detect configured CORESET(s), which is periodically monitored and/or detected.

Preferably, the information of an ending symbol may comprise at least one of the following: which symbol is the ending symbol, and the transmission direction or functionality of the ending symbol. The information of an ending slot may also comprise at least one of the following: which slot is the ending slot, and the transmission direction or functionality of each symbol within the ending slot.

Preferably, the indication could be a slot formation indicator or a slot format combination or a slot format value.

**From perspective of network:**

Network node may transmit a DCI to a UE. Network node may also transmit an indication to the UE. Furthermore, network node may transmit (and/or receive) physical channel and/or RS to the UE in an unlicensed channel. In addition, network node may transmit (and/or receive) physical channel and/or RS to the UE within a channel occupancy time.

Preferably, the indication may indicate a symbol, wherein the UE considers the symbol is the ending symbol of the channel occupancy time. The symbol may not be the (actual) ending symbol of the channel occupancy time. The indication may indicate an ending slot of the channel occupancy time.

Preferably, the DCI may schedule a (time domain) resource, wherein the last symbol of the (time domain) resource is later than the symbol indicated in the indication. The DCI may also schedule a (time domain) resource, wherein the (time domain) resource is located within the ending slot. Furthermore, the DCI may schedule a (time domain) resource, wherein the last symbol of the (time domain) resource is within the channel occupancy time. In addition, the DCI may schedule a (time domain) resource, wherein the last symbol of the (time domain) resource is before or equal to the end of the channel occupancy time.

Preferably, after (the end of) the ending slot, network node may not transmit configured data channel (and/or receive configured data channel) until network node performs another clear channel assessment or LBT procedure (successfully). In addition, after (the end of) the ending slot, network node may not transmit configured RS for channel measurement (and/or receive configured RS for channel measurement) until network node performs another clear channel assessment or LBT procedure (successfully). Furthermore, after (the end of) the ending slot, network node may not transmit configured CORESET(s) until network node performs another clear channel assessment or LBT procedure (successfully). Also, after (the end of) the ending slot, network node may not receive PRACH on configured PRACH transmission occasion until network node performs another clear channel assessment or LBT procedure (successfully).

Preferably, after (the end of) the last symbol of the scheduled resource, network node may not transmit configured data channel (and/or receive configured data channel) until network node performs another clear channel assessment or LBT procedure (successfully). In addition, after (the end of) the last symbol of the scheduled resource, network node may not transmit configured RS for channel measurement (and/or receive configured RS for channel measurement) until network node performs another clear channel assessment or LBT procedure (successfully). Furthermore, after (the end of) the last symbol of the scheduled resource, network node may not transmit configured CORESET(s) until network node performs another clear channel assessment or LBT procedure (successfully). Also, after (the end of) the last symbol of the scheduled resource, network node may not receive PRACH on configured PRACH transmission occasion until network node performs another clear channel assessment or LBT procedure (successfully).

All or some of above embodiments can be combined to form a new embodiment.

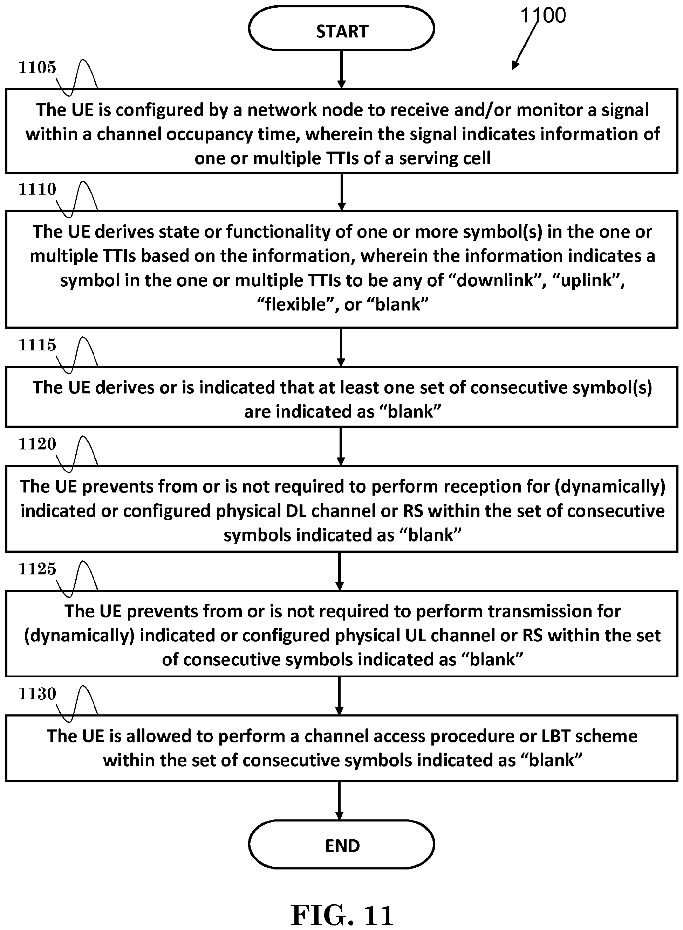

FIG. 11 is a flow chart 1100 according to one exemplary embodiment from the perspective of a UE (User Equipment). In step 1105, the UE is configured by a network node to receive and/or monitor a signal within a channel occupancy time, wherein the signal indicates information of one or multiple TTIs of a serving cell. In step 1110, the UE derives state or functionality of one or more symbol(s) in the one or multiple TTIs based on the information, wherein the information indicates a symbol in the one or multiple TTIs to be any of "downlink", "uplink", "flexible", or "blank". In step 1115, the UE derives or is indicated that at least one set of consecutive symbol(s) are indicated as "blank". In step 1120, the UE prevents from or is not required to perform reception for (dynamically) indicated or configured physical DL channel or RS within the set of consecutive symbols indicated as "blank". In step 1125, the UE prevents from or is not required to perform transmission for (dynamically) indicated or configured physical UL channel or RS within the set of consecutive symbols indicated as "blank". In step 1130, the UE is allowed to perform a channel access procedure or LBT scheme within the set of consecutive symbols indicated as "blank .

Preferably, a (dynamically) indicated physical channel or RS could be indicated by a PDCCH/DCI or MAC-CE. Preferably, the UE could consider or interpret a TTI, among the one or multiple TTIs, as an ending TTI of the channel occupancy time, wherein the TTI comprises the last set of consecutive symbols indicated as "blank and at least one symbol not indicated as "blank". The UE could also consider or interpret a symbol, among the one or more symbol(s), as an ending symbol of the channel occupancy time, wherein the symbol is the last symbol not indicated as "blank" in the ending TTI. Furthermore, the UE could prevent from performing (dynamically) indicated or configured physical DL channel or RS reception or (dynamically) indicated or configured physical UL (Uplink) channel or RS transmission, after (the ending symbol within) the ending TTI in the serving cell.

Preferably, the information could be or comprise a first slot format combination intended for the channel occupancy time in the serving cell, and/or the signal could be a slot format related DCI. The serving cell could be operated operated or located in unlicensed spectrum, and/or a TTI could be replaced with or referred to as a slot.

Preferably, the network node could prevent from indicating a symbol in licensed spectrum to be "blank" in a second slot format combination. The UE could prevent from performing (i) (dynamically) indicated or configured physical DL channel or RS reception, or (ii) (dynamically) indicated or configured physical UL channel or RS transmission after (the ending symbol within) the ending TTI in the serving cell, until next channel occupancy time starts. "Blank" could be replaced with or referred to as "reserved", "empty", "unoccupied", or "out of channel occupancy time". The first slot format combination and the second slot format combination could be a same slot format combination.

Preferably, the reception for (dynamically) indicated or configured physical DL channel or RS may not mean or comprise the monitoring or reception for indication of start of next channel occupancy time.

Referring back to FIGS. 3 and 4, in one exemplary embodiment of a UE, the device 300 includes a program code 312 stored in the memory 310. The CPU 308 could execute program code 312 to enable the UE (i) to be configured by a network node to receive and/or monitor a signal within a channel occupancy time, wherein the signal indicates information of one or multiple TTIs of a serving cell, (ii) to derive state or functionality of one or more symbol(s) in the one or multiple TTIs based on the information, wherein the information indicates a symbol in the one or multiple TTIs to be any of "downlink", "uplink", "flexible", or "blank", (iii) to derive or be indicated that at least one set of consecutive symbol(s) are indicated as "blank", (iv) to prevent from or is not required to perform reception for (dynamically) indicated or configured physical DL (Downlink) channel or RS (Reference Signal) within the set of consecutive symbols indicated as "blank", (v) to prevent from or is not required to perform transmission for (dynamically) indicated or configured physical UL (Uplink) channel or RS within the set of consecutive symbols indicated as "blank", and (vi) to be allowed to perform a channel access procedure or LBT (Listen Before Talk) scheme within the set of consecutive symbols indicated as "blank". Furthermore, the CPU 308 can execute the program code 312 to perform all of the above-described actions and steps or others described herein.

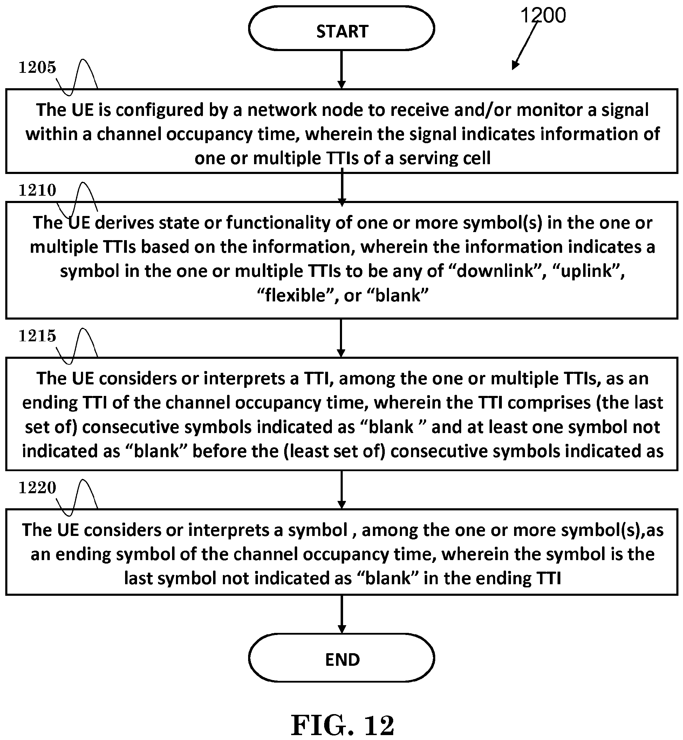

FIG. 12 is a flow chart 1200 according to one exemplary embodiment from the perspective of a UE. In step 1205, the UE is configured by a network node to receive and/or monitor a signal within a channel occupancy time, wherein the signal indicates information of one or multiple TTIs of a serving cell. In step 1210, the UE derives state or functionality of one or more symbol(s) in the one or multiple TTIs based on the information, wherein the information indicates a symbol in the one or multiple TTIs to be any of "downlink", "uplink", "flexible", or "blank". In step 1215, the UE considers or interprets a TTI, among the one or multiple TTIs, as an ending TTI of the channel occupancy time, wherein the TTI comprises (the last set of) consecutive symbols indicated as "blank" and at least one symbol not indicated as "blank" before the (last set of) consecutive symbols indicated as "blank". In step 1220, the UE considers or interprets a symbol, among the one or more symbol(s), as an ending symbol of the channel occupancy time, wherein the symbol is the last symbol not indicated as "blank" in the ending TTI.

Preferably, the UE could prevent from performing (i) (dynamically) indicated or configured physical DL (Downlink) channel or RS reception, or (ii) (dynamically) indicated or configured physical UL (Uplink) channel or RS transmission after (the ending symbol within) the ending TTI in the serving cell, until next channel occupancy time starts. Preferably, the reception for (dynamically) indicated or configured physical DL channel or RS could not mean or comprise the monitoring or reception for indicating start of a or next channel occupancy time. Preferably, the serving cell could be operated or located in unlicensed spectrum, and a TTI could be replaced with or referred to as a slot.

Referring back to FIGS. 3 and 4, in one exemplary embodiment of a UE, the device 300 includes a program code 312 stored in the memory 310. The CPU 308 could execute program code 312 to enable the UE (i) to be configured by a network node to receive and/or monitor a signal within a channel occupancy time, wherein the signal indicates information of one or multiple TTIs of a serving cell, (ii) to derive state or functionality of one or more symbol(s) in the one or multiple TTIs based on the information, wherein the information indicates a symbol in the one or multiple TTIs to be any of "downlink", "uplink", "flexible", or "blank", (iii) to consider or interpret a TTI, among the one or multiple TTIs, as an ending TTI of the channel occupancy time, wherein the TTI comprises (the last set of) consecutive symbols indicated as "blank " and at least one symbol not indicated as "blank" before the (last set of) consecutive symbols indicated as "blank ", and (iv) to consider or interpret a symbol, among the one or more symbol(s), as an ending symbol of the channel occupancy time, wherein the symbol is the last symbol not indicated as "blank" in the ending TTI. Furthermore, the CPU 308 can execute the program code 312 to perform all of the above-described actions and steps or others described herein.

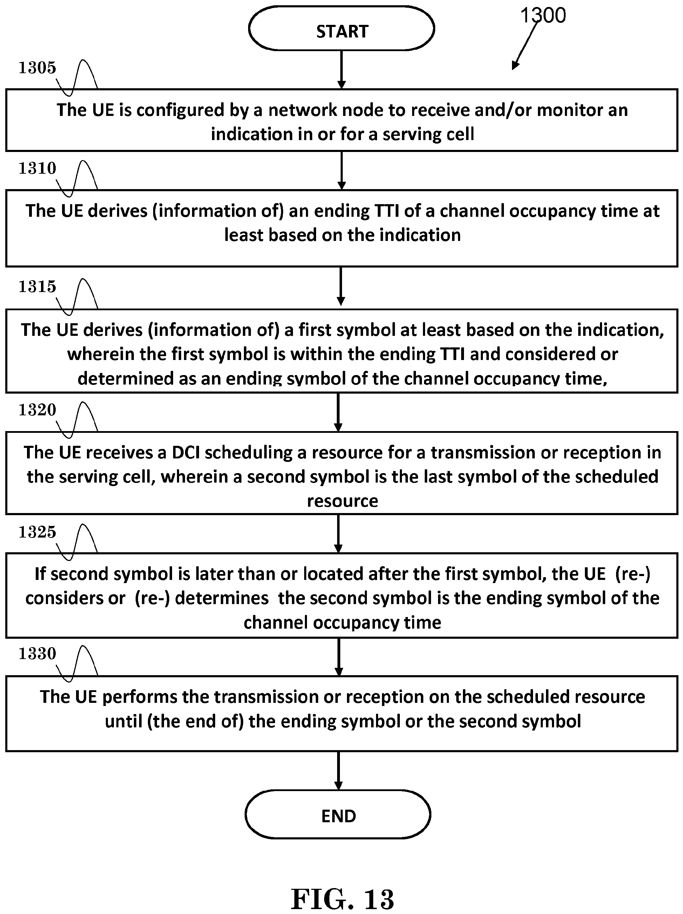

FIG. 13 is a flow chart 1300 according to one exemplary embodiment from the perspective of a UE. In step 1305, the UE is configured by a network node to receive and/or monitor an indication in or for a serving cell. In step 1310, the UE derives (information of) an ending TTI of a channel occupancy time at least based on the indication. In step 1315, the UE derives (information of) a first symbol at least based on the indication, wherein the first symbol is within the ending TTI and considered or determined as an ending symbol of the channel occupancy time. In step 1320, the UE receives a DCI (Downlink Control Information) scheduling a resource for a transmission or reception in the serving cell, wherein a second symbol is the last symbol of the scheduled resource. In step 1325, if the second symbol is later than or located after the first symbol, the UE (re-) considers or (re-) determines the second symbol is the ending symbol of the channel occupancy time. In step 1330, the UE performs the transmission or reception on the scheduled resource until (the end of) the ending symbol or the second symbol.

Preferably, the second symbol could overwrite the first symbol (to be considered or determined) as the ending symbol of the channel occupancy time, if the second symbol is later than or located after the first symbol. The UE could receive the indication within the channel occupancy time. The indication could be or comprise a slot formation indicator or a slot format combination or a slot format value. The UE could consider the DCI as valid, and/or the UE may not neglect or may not ignore the DCI, even though the last symbol of the scheduled resource in the DCI is later than or located after the first symbol. The UE could prevent from performing (i) (dynamically) indicated or configured physical DL (Downlink) channel or RS (Reference Signal) reception, or (ii) (dynamically) indicated or configured physical UL (Uplink) channel or RS (Reference Signal) transmission, after (the ending symbol within) the ending TTI in the serving cell, until next channel occupancy time starts.

Preferably, the information of an ending TTI may comprise at least one of the following: (index of) an ending TTI, and state or transmission direction or functionality of one or more symbols within an ending TTI. Furthermore, the information of a first symbol may comprise at least one of the following: (index of) an ending or first symbol, and state or transmission direction or functionality of an ending or first symbol.

Preferably, if the second symbol is not later than or not located after the first symbol, the UE could prevent from performing (dynamically) indicated or configured physical DL channel or RS reception, or (dynamically) indicated or configured physical UL channel or RS transmission, after the first symbol, until next channel occupancy time starts. The first symbol could be the last symbol not indicated as "flexible" in the ending TTI.

Preferably, the serving cell could be operated or located in unlicensed spectrum, and/or a TTI could be replaced with or referred to as a slot. The reception for (dynamically) indicated or configured physical DL (Downlink) channel or RS (Reference Signal) may not mean or comprise the monitoring or reception for indicating start of a or next channel occupancy time.

Referring back to FIGS. 3 and 4, in one exemplary embodiment of a UE, the device 300 includes a program code 312 stored in the memory 310. The CPU 308 could execute program code 312 to enable the UE (i) to be configured by a network node to receive and/or monitor an indication in or for a serving cell, (ii) to derive (information of) an ending TTI of a channel occupancy time at least based on the indication, (iii) to derives (information of) a first symbol at least based on the indication, wherein the first symbol is within the ending TTI and considered or determined as an ending symbol of the channel occupancy time, (iv) to receive a DCI scheduling a resource for transmission or reception in the serving cell, wherein a second symbol is the last symbol of the scheduled resource, (v) to (re-) consider or (re-) determine the second symbol is the ending symbol of the channel occupancy time if the second symbol is later than or located after the first symbol, and (vi) to perform the transmission or reception on the scheduled resource until (the end of) the ending symbol or the second symbol. Furthermore, the CPU 308 can execute the program code 312 to perform all of the above-described actions and steps or others described herein.

Various aspects of the disclosure have been described above. It should be apparent that the teachings herein could be embodied in a wide variety of forms and that any specific structure, function, or both being disclosed herein is merely representative. Based on the teachings herein one skilled in the art should appreciate that an aspect disclosed herein could be implemented independently of any other aspects and that two or more of these aspects could be combined in various ways. For example, an apparatus could be implemented or a method could be practiced using any number of the aspects set forth herein. In addition, such an apparatus could be implemented or such a method could be practiced using other structure, functionality, or structure and functionality in addition to or other than one or more of the aspects set forth herein. As an example of some of the above concepts, in some aspects concurrent channels could be established based on pulse repetition frequencies. In some aspects concurrent channels could be established based on pulse position or offsets. In some aspects concurrent channels could be established based on time hopping sequences. In some aspects concurrent channels could be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for a User Equipment, in the following also referred to as UE, comprising:

   the UE is configured by a network node to receive and/or monitor a signal within a channel occupancy time, wherein the signal indicates information of one or multiple Transmission Time Intervals, in the following also referred to as TTIs, of a serving cell (1105);
   the UE derives state or functionality of one or more symbol(s) in the one or multiple TTIs based on the information, wherein the information indicates a symbol in the one or multiple TTIs to be any of "downlink", "uplink", "flexible", or "blank" (1110);
   the UE derives or is indicated that at least one set of consecutive symbol(s) are indicated as "blank" (1115);
   the UE prevents from or is not required to perform reception for, preferably dynamically, indicated or configured physical Downlink, in the following also referred to as DL, channel or Reference Signal, in the following also referred to as RS, within the set of consecutive symbols indicated as "blank" (1120);
   the UE prevents from or is not required to perform transmission for, preferably dynamically, indicated or configured physical Uplink, in the following also referred to as UL, channel or RS within the set of consecutive symbols indicated as "blank" (1125); and
   the UE is allowed to perform a channel access procedure or Listen Before Talk, in the following also referred to as LBT, scheme within the set of consecutive symbols indicated as "blank" (1130).

2. The method of claim 1, further comprising:

   the UE considers or interprets a TTI, among the one or multiple TTIs, as an ending TTI of the channel occupancy time, wherein the TTI comprises the last set of consecutive symbols indicated as "blank " and at least one symbol not indicated as "blank";
   the UE considers or interprets a symbol, among the one or more symbol(s), as an ending symbol of the channel occupancy time, wherein the symbol is the last symbol not indicated as "blank" in the ending TTI; and
   the UE prevents from performing, preferably dynamically, indicated or configured physical DL channel or RS reception, or, preferably dynamically, indicated or configured physical UL channel or RS transmission, after, preferably the ending symbol within, the ending TTI in the serving cell.

3. The method of claim 1 or 2, wherein the information is or comprises a first slot format combination intended for the channel occupancy time in the serving cell, and/or the signal is a slot format related Downlink Control Information, in the following also referred to as DCI.

4. The method of any one of claims 1 to 3, wherein the network node prevents from indicating a symbol in licensed spectrum to be "blank" in a second slot format combination; and/or
wherein "blank" is replaced with or referred to as "reserved", "empty", "unoccupied", or "out of channel occupancy time".

5. A method for a User Equipment, in the following also referred to as UE, comprising:

the UE is configured by a network node to receive and/or monitor a signal within a channel occupancy time, wherein the signal indicates information of one or multiple Transmission Time Intervals, in the following also referred to as TTIs, of a serving cell (1205);
the UE derives state or functionality of one or more symbol(s) in the one or multiple TTIs based on the information, wherein the information indicates a symbol in the one or multiple TTIs to be any of "downlink", "uplink", "flexible", or "blank" (1210);
the UE considers or interprets a TTI, among the one or multiple TTIs, as an ending TTI of the channel occupancy time, wherein the TTI comprises, preferably the last set of, consecutive symbols indicated as "blank" and at least one symbol not indicated as "blank" before the, preferably last set of, consecutive symbols indicated as "blank" (1215); and
the UE considers or interprets a symbol, among the one or more symbol(s), as an ending symbol of the channel occupancy time, wherein the symbol is the last symbol not indicated as "blank" in the ending TTI (1220).

6. A method for a User Equipment, in the following also referred to as UE, comprising:

the UE is configured by a network node to receive and/or monitor an indication in or for a serving cell (1305);
the UE derives, preferably information of, an ending Transmission Time Interval, in the following also referred to as TTI, of a channel occupancy time at least based on the indication (1310);
the UE derives, preferably information of, a first symbol at least based on the indication, wherein the first symbol is within the ending TTI and considered or determined as an ending symbol of the channel occupancy time (1315);
the UE receives a Downlink Control Information, in the following also referred to as DCI, scheduling a resource for a transmission or reception in the serving cell, wherein a second symbol is the last symbol of the scheduled resource (1320);
if the second symbol is later than or located after the first symbol, the UE (re-) considers or (re-) determines the second symbol is the ending symbol of the channel occupancy time (1325); and
the UE performs the transmission or reception on the scheduled resource until, preferably the end of, the ending symbol or the second symbol (1330).

7. The method of claim 6, wherein the second symbol overwrites the first symbol, preferably to be considered or determined, as the ending symbol of the channel occupancy time, if the second symbol is later than or located after the first symbol; and/or
wherein the UE receives the indication within the channel occupancy time; and/or
wherein the indication is or comprises a slot formation indicator or a slot format combination or a slot format value.

8. The method of claim 6 or 7, wherein the UE considers the DCI as valid, and/or the UE does not neglect or does not ignore the DCI, even though the last symbol of the scheduled resource in the DCI is later than or located after the first symbol.

9. The method of any one of claims 6 to 8, wherein the information of an ending TTI comprises at least one of the following: preferably index of, an ending TTI, and state or transmission direction or functionality of one or more symbols within an ending TTI, and/or
wherein the information of a first symbol comprises at least one of the following: preferably index of, an ending or first symbol, and state or transmission direction or functionality of an ending or first symbol.

10. The method of any one of claims 6 to 9, wherein if the second symbol is not later than or not located after the first symbol, the UE prevents from performing, preferably dynamically, indicated or configured physical DL channel or RS reception, or, preferably dynamically, indicated or configured physical UL channel or RS transmission, after the first symbol, until next channel occupancy time starts; and/or
wherein the first symbol is the last symbol not indicated as "flexible" in the ending TTI.

**11.** The method of any one of claims 1 to 10, wherein the serving cell is operated or located in unlicensed spectrum, and/or wherein a TTI is replaced with or referred to as a slot.

**12.** The method of any one of claims 1 to 11, wherein the UE prevents from (i) performing, preferably dynamically, indicated or configured physical DL channel or RS reception, or (ii) performing, preferably dynamically, indicated or configured physical UL channel or RS transmission, after, preferably the ending symbol within, the ending TTI in the serving cell, until next channel occupancy time starts.

**13.** The method of any one of claims 1 and 12, wherein the reception for, preferably dynamically, indicated or configured physical DL channel or RS does not mean or comprise the monitoring or reception for indicating start of a or next channel occupancy time.

**14.** A User Equipment, in the following also referred to as UE, comprising:

a control circuit (306);
a processor (308) installed in the control circuit (306); and
a memory (310) installed in the control circuit (306) and coupled to the processor (308);
wherein the processor (308) is configured to execute a program code (312) stored in the memory (310) to perform the method steps as defined in any one of the preceding claims.

FIG. 1

**FIG. 2**

EP 3 609 283 A2

```
                                                          300

  ┌─────────────────────────────────────────────────────┐
  │  ┌──────────────┐          ┌──────────────┐          │
  │  │    INPUT      │          │    OUTPUT     │          │
  │  │   DEVICE      │          │   DEVICE      │          │
  │  │    302        │          │    304        │          │
  │  └──────┬───────┘          └──────┬───────┘          │
  │         ↕                         ↕                   │
  │  ┌───────────────────────────────────────────┐       │
  │  │      CONTROL CIRCUIT 306                   │       │
  │  │  ┌──────────────────────────────────────┐ │       │
  │  │  │          CPU 308                      │ │       │
  │  │  └──────────────────────────────────────┘ │       │
  │  │                  ↕                          │       │
  │  │  ┌──────────────────────────────────────┐ │       │
  │  │  │       MEMORY 310                      │ │       │
  │  │  │  ┌────────────────────────────────┐  │ │       │
  │  │  │  │   PROGRAM CODE 312             │  │ │       │
  │  │  │  └────────────────────────────────┘  │ │       │
  │  │  └──────────────────────────────────────┘ │       │
  │  └───────────────────┬───────────────────────┘       │
  │                      ↕                                │
  │  ┌───────────────────────────────────────────┐       │
  │  │         TRANSCEIVER 314                    │       │
  │  └───────────────────────────────────────────┘       │
  └─────────────────────────────────────────────────────┘
```

# FIG. 3

PROGRAM CODE *312*

APPLICATION LAYER *400*

LAYER 3 *402*

LAYER 2 *404*

LAYER 1 *406*

FIG. 4

| Channel Access Priority Class ($p$) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

## FIG. 5

| Channel Access Priority Class ($p$) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127,255,511,1023} |
| 4 | 7 | 15 | 1023 | 6ms or 10 ms | {15,31,63,127,255,511,1023} |

NOTE1: For $p = 3,4$, $T_{ulmcot,p}$ =10ms if the higher layer parameter 'absenceOfAnyOtherTechnology-r14' indicates TRUE, otherwise, $T_{ulmcot,p}$ =6ms.

NOTE 2: When $T_{ulmcot,p}$ =6ms it may be increased to 8 ms by inserting one or more gaps. The minimum duration of a gap shall be 100 µs. The maximum duration before including any such gap shall be 6 ms.

## FIG. 6

| $\mu$ | $\Delta f = 2^{\mu} \cdot 15\,[\text{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

## FIG. 7

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

## FIG. 8

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

## FIG. 9

| Format | Symbol number in a slot | | | | | | | | | | | | | |
|--------|---|---|---|---|---|---|---|---|---|---|----|----|----|----|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |

# FIG. 10A

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| ... | ... | ... | ... | ... | ... | ... | ... | ... | ... | ... | ... | ... | ... | ... |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 − 254 | Reserved | | | | | | | | | | | | | |
| 255 | UE determines the slot format for the slot based on tdd-UL-DL-ConfigurationCommon, tdd-UL-DL-ConfigurationCommon2, or tdd-UL-DL-ConfigDedicated and, if any, on detected DCI formats | | | | | | | | | | | | | |

## FIG. 10B

START

1100

1105

The UE is configured by a network node to receive and/or monitor a signal within a channel occupancy time, wherein the signal indicates information of one or multiple TTIs of a serving cell

1110

The UE derives state or functionality of one or more symbol(s) in the one or multiple TTIs based on the information, wherein the information indicates a symbol in the one or multiple TTIs to be any of "downlink", "uplink", "flexible", or "blank"

1115

The UE derives or is indicated that at least one set of consecutive symbol(s) are indicated as "blank"

1120

The UE prevents from or is not required to perform reception for (dynamically) indicated or configured physical DL channel or RS within the set of consecutive symbols indicated as "blank"

1125

The UE prevents from or is not required to perform transmission for (dynamically) indicated or configured physical UL channel or RS within the set of consecutive symbols indicated as "blank"

1130

The UE is allowed to perform a channel access procedure or LBT scheme within the set of consecutive symbols indicated as "blank"

END

## FIG. 11

1200

**START**

1205

The UE is configured by a network node to receive and/or monitor a signal within a channel occupancy time, wherein the signal indicates information of one or multiple TTIs of a serving cell

1210

The UE derives state or functionality of one or more symbol(s) in the one or multiple TTIs based on the information, wherein the information indicates a symbol in the one or multiple TTIs to be any of "downlink", "uplink", "flexible", or "blank"

1215

The UE considers or interprets a TTI, among the one or multiple TTIs, as an ending TTI of the channel occupancy time, wherein the TTI comprises (the last set of) consecutive symbols indicated as "blank " and at least one symbol not indicated as "blank" before the (least set of) consecutive symbols indicated as

1220

The UE considers or interprets a symbol , among the one or more symbol(s),as an ending symbol of the channel occupancy time, wherein the symbol is the last symbol not indicated as "blank" in the ending TTI

**END**

## FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Final Report of 3GPP TSG RAN WG1 #92bis v1.0.0*
- *Draft Report of 3GPP TSG RAN WG1 #93 v0.2.0,* 21 May 2018
- Physical layer procedures for shared spectrum channel access. *TS 37.213 v15.0.0*
- Physical channels and modulation. *TS 38.211 V15.2.0*
- Multiplexing and channel coding. *TS 38.212 V15.2.0*
- Physical layer procedures for control. *TS 38.213 V15.2.0*
- Radio Resource Control (RRC) protocol specification. *TS 38.331 V15.2.1*